# EUROPÄISCHE PATENTSCHRIFT

(11) **EP 2 443 069 B1**
(45) Veröffentlichungstag und Bekanntmachung des Hinweises auf die Patenterteilung: **06.08.2014**
(21) Anmeldenummer: 09776728.9
(22) Anmeldetag: 15.06.2009
(51) Int. Cl.: C02F 3/28, C02F 1/20, C02F 1/24, C02F 5/00, C02F 9/00, C02F 1/52, C02F 1/66, D21C 5/00, D21C 11/00, D21C 11/06, C02F 1/56, C02F 103/28

(54) **ANLAGE UND VERFAHREN ZUR AUFBEREITUNG VON PROZESSWASSER MIT GETRENNTER ABTRENNUNG VON GASEN UND FESTSTOFF**
SYSTEM AND METHOD FOR TREATING PROCESS WATER WITH SEPARATE SEPARATION OF GASES AND SOLIDS
INSTALLATION ET PROCÉDÉ DE TRAITEMENT DES EAUX INDUSTRIELLES PAR SÉPARATION SÉPARÉE DES GAZ ET DES MATIÈRES SOLIDES

(43) Veröffentlichungstag der Anmeldung: 25.04.2012
(73) Patentinhaber: MERI Environmental Solutions GmbH, 81673 München (DE)
(72) Erfinder: TROUBOUNIS, George, 80331 München (DE); EFINGER, Dieter, 84036 Kumhausen (DE); NIEMCZYK, Bernhard, 88250 Weingarten (DE); MENKE, Lucas, 81545 München (DE)
(74) Vertreter: Sauer, Philippe
(86) Internationale Anmeldenummer: PCT/EP2009/004284
(87) Internationale Veröffentlichungsnummer: WO 2010/145672

(56) Entgegenhaltungen:
- EP-A- 1 120 380
- EP-A- 1 241 140
- EP-A- 1 884 497
- WO-A-2008/108599
- DE-A1-102006 060 426
- DE-A1-102006 060 428
- KR-A- 20010 038 791
- KR-A- 20060 125 981
- HABETS L H A ET AL: "In Line Biological Water Regeneration In A Zero Discharge Recycle Paper Mill" WATER SCIENCE AND TECHNOLOGY, IWA PUBLISHING, GB, Bd. 35, Nr. 2-3, 1. Januar 1997 (1997-01-01), Seiten 41-48, XP002526269
- Karl Höll: "Wasser. Nutzung im Kreislauf, Hygiene, Analyse und Bewertung. 8. Auflage", 1 January 2002 (2002-01-01), Walter de Gruyter, Berlin New York ISBN: 3-11-012931-0 * page 750 - page 752 *

## Beschreibung

Die vorliegende Erfindung betrifft ein wenigstens einen Prozesswasseraufbereitungsschritt umfassendes Verfahren zur Reinigung von Prozesswasser, insbesondere zur kontinuierlichen Reinigung von Prozesswasser in der Papierindustrie, sowie eine insbesondere zur Durchführung dieses Verfahrens geeignete Anlage zur Reinigung von Prozesswasser, insbesondere zur kontinuierlichen Reinigung von Prozesswasser in der Papierindustrie.

Eine Aufbereitung von Prozesswasser ist auf vielen technischen Gebieten insbesondere in den Fällen notwendig, in denen das Prozesswasser in der entsprechenden Anlage im Kreislauf geführt wird, um eine Anreicherung des Prozesswassers mit Störstoffen zu verhindern. Dies gilt insbesondere auch für das Prozesswasser bei der Papierherstellung, und zwar sowohl bei der Papierherstellung aus Frischfasern als auch insbesondere bei der Papierherstellung aus Altpapier.

In den letzten Jahrzehnten wird Papier zunehmend aus Altpapier gewonnen, um den Energieverbrauch bei der Papierherstellung zu senken, und insbesondere, um den Verbrauch an natürlichen Ressourcen zu vermindern. Während zur Herstellung einer Tonne Primärfaserpapier rund 2,2 Tonnen Holz benötigt werden, kann der Holzbedarf beim Papierrecycling abhängig von dem Anteil der aus Altpapier stammenden Sekundärfasern, bezogen auf die Gesamtfasermenge in dem Recyclingpapier, drastisch vermindert bzw. auf null gesenkt werden. Zudem wird bei der Produktion von Recyclingpapier im Vergleich zu der Papierherstellung aus Primärfasern nur halb so viel Energie und nur ein Drittel an Frischwasser benötigt. Dennoch ist die Qualität von Recyclingpapier, beispielsweise hinsichtlich der Tintenfestigkeit, des Druckverhaltens, des Weißgrades und der Alterungsbeständigkeit, heute so hoch wie die von Primärfaserpapieren.

Bei der Papierherstellung aus Altpapier wird das Altpapier zunächst mit Wasser vermengt und in einem Pulper bzw. Stoffauflöser unter Rühren und Mischen zerkleinert, um die einzelnen Faserverbunde aufzulösen. Anschließend erfolgt eine Reinigung der Fasern, um nichtfasrige Fremdkörper aus dem Faserbrei zu entfernen, bevor die Fasern optional entfärbt werden und schließlich ggf. nach Zusatz eines geringen Anteils an Primärfasern auf einer Papiermaschine zu Papier verarbeitet werden. Eine entsprechende Anlage umfasst mithin eine Vorrichtung zur Aufbereitung von Altpapier und eine Papiermaschine, wobei die Altpapieraufbereitungsvorrichtung eine Altpapierauflöseeinheit bzw. einen Pulper, in der dem Altpapier Prozesswasser zum Auflösen und Zerkleinern der Fasern zugeführt wird, eine Sortiervorrichtung zur Entfernung von Verschmutzungen und eine Entwässerungseinheit zur Entfernung von Prozesswasser aufweist. Es ist auch bekannt, in der Anlage zwei oder mehr Altpapieraufbereitungsvorrichtungen bzw. Stufen, sogenannte Loops, vorzusehen, um die Qualität der aus dem Altpapier aufbereiteten Fasern zu erhöhen. Jeder Loop der Altpapieraufbereitungsvorrichtung und die Papiermaschine umfassen dabei vorzugsweise eine eigene Prozesswasseraufbereitungseinheit, wobei die einzelnen Prozesswasseraufbereitungseinheiten durch eine zwischen den einzelnen Loops vorgesehene Entwässerungseinrichtung voneinander entkoppelt sein können.

Um das Prozesswasser in jedem Loop im Kreislauf führen zu können und so den Frischwasserzusatz minimieren zu können, muss das Prozesswasser in den einzelnen Prozesswasseraufbereitungseinheiten in einem erforderlichen Ausmaß gereinigt werden. Hierzu umfassen die Prozesswasseraufbereitungseinheiten üblicherweise eine Stoffrückgewinnungseinheit und/oder eine Entstoffungseinheit, in der in dem Prozesswasser enthaltene Fasern aus dem Prozesswasser mechanisch abgetrennt werden, um vollständig oder teilweise in die Altpapieraufbereitungsvorrichtung zurückgeführt zu werden. Diese Stoffrückgewinnungseinheiten bzw. Entstoffungseinheiten sind üblicherweise als Sieb- und/oder Entspannungsflotationsanlagen ausgebildet.

Aus der DE 40 42 224 A1 ist eine Anlage zur Herstellung von Papier aus Altpapier bekannt, welche eine einen Loop umfassende Altpapieraufbereitungsvorrichtung sowie eine Papiermaschine umfasst. Die Altpapieraufbereitungsvorrichtung umfasst einen Pulper, in den Altpapier eingeführt und mit Prozesswasser versetzt wird, um das Altpapier aufzulösen, eine stromabwärts des Pulpers vorgesehene Sortierstufe, in der aus dem in dem Pulper hergestellten, suspendierten Faserstoff Verunreinigungen abgetrennt werden, eine Eindickungseinheit, um das Prozesswasser aus dem suspendierten Faserstoff weitestgehend zu entfernen, sowie eine Prozesswasseraufbereitungseinheit zur Reinigung des Prozesswassers. Die Prozesswasseraufbereitungseinheit wiederum besteht im Wesentlichen aus einer Grobreinigungsvorrichtung, einer, beispielsweise einen UASB-Reaktor umfassenden anaeroben Klärstufe sowie einer aeroben Klärstufe. Das in der Prozesswasseraufbereitungseinheit gereinigte Prozesswasser kann entweder als Abwasser entsorgt werden oder gemäß einer anderen Ausführungsform teilweise als Auflösewasser in den Pulper und teilweise in die Papiermaschine zurückgeführt werden, wobei in diesem Fall dem durch die Prozesswasseraufbereitungseinheit der Altpapieraufbereitungsvorrichtung geführten Prozesswasser ein Teilstrom von Rückwasser aus der Papiermaschine zugesetzt wird.

Die Prozesswasserkreisläufe der Papiermaschine und der Prozesswasseraufbereitungseinheit sind bei dieser Anlage somit nicht vollständig voneinander entkoppelt, so dass die Qualität des Prozesswassers in der Papiermaschine und die Qualität des Prozesswassers in der Altpapieraufbereitungsvorrichtung nicht effizient und unabhängig voneinander gesteuert werden können. Ein weiterer Nachteil der letztgenannten Ausführungsform ist, dass sich in dem Prozesswasser wegen der teilweise Kreislaufführung eine hohe Wasserhärte einstellt, welche den Betrieb des anaeroben UASB-Reaktors stören kann. In anaeroben Reaktoren werden nämlich Mikroorganismenpellets eingesetzt, für deren Funktion es wichtig ist, dass diese ein definiertes spezifisches Gewicht aufweisen, um während des Abbaus der organischen Verbindungen aus dem Prozesswasser durch das dabei gebildete Biogas, welches an den Mikroorganismenpellets anhaftet, in dem Reaktor nach oben steigen zu können, um an einem Gasabscheider das gebildete Biogas abzutrennen. Nach Abtrennung des Biogases darf das spezifische Gewicht insbesondere nicht so groß werden, dass die Mikroorganismenpellets bis auf den Boden des Reaktors absinken, da diese sonst nicht mehr an dem Reinigungsprozess teilnehmen können. Aufgrund ihrer Struktur und Größe wirken Mikroorganismenpellets jedoch als Kristallisationskeime für Kalkablagerungen, so dass sich bei einer gewissen Wasserhärte und bei entsprechenden pH-Werten auf den Mikroorganismenpellets Kalk abscheidet, wobei diese Ablagerungen zu einer unkalkulierbaren Verschiebung des spezifischen Gewichts der Pellets führen, weswegen diese ihre Funktion nicht mehr wahrnehmen können. Auch die Stoffwechseltätigkeit der anaeroben Mikroorganismen bewirkt eine Verschiebung des Kalk-Kohlensäure-Gleichgewichts durch die Erzeugung von unter anderem Hydrogencarbonat (HCO₃-), was eine Kalkausfällung auf den Mikroorganismenpellets weiter begünstigt. Um trotz der Kalkausfällung auf den Mikroorganismenpellets deren Funktion sicherzustellen, müssten die Rezirkulationsmengen in dem anaeroben Reaktor vergrößert werden, um die Pellets trotz größerem spezifischen Gewicht in dem Reaktor in Schwebe zu halten. Der Rezirkulationsmenge sind aber einerseits durch die hydraulische Kapazität der Separatoren und andererseits durch die Notwendigkeit, die Strömung in dem Reaktor laminar zu halten, Grenzen gesetzt. Höhere Rezirkulationsmengen bewirken außerdem durch die Entstehung von Druckgradienten saug- und druckseitig der Pumpe in der Rezirkulationsleitung das Entweichen von Kohlendioxid und dadurch eine weitere Verschiebung des Kalk-Kohlensäure-Gleichgewichts in Richtung einer Kalkausfällung.

Um diesen Nachteilen zu begegnen wurde in der WO 2007/076943 ein wenigstens einen Prozesswasseraufbereitungsschritt umfassendes Verfahren zur Aufbereitung von im Kreislauf geführten Prozesswasser, insbesondere zur Aufbereitung von Prozesswasser bei der Papierherstellung, vorgeschlagen, bei dem wenigstens ein Teil des dem Prozesswasseraufbereitungsschritt kontinuierlich zugeführten Prozesswassers einem Reinigungsschritt in einem mit anaeroben Mikroorganismen versetzten anaeroben Reaktor sowie einem Entkalkungsschritt unterzogen wird, wobei das Prozesswasser in dem Entkalkungsschritt einem Druckentspannungsflotationsschritt unterzogen wird. Aufgrund der Reinigung des Prozesswassers in einem anaeroben Reaktor können die in dem Prozesswasser enthaltenen Verunreinigungen effizient entfernt werden, so dass aufgrund der dadurch erzielten Reinheit das Prozesswasser zumindest nahezu vollständig im Kreislauf geführt werden kann, ohne dass sich die Verunreinigungen durch die Kreislaufführung anreichern. Zudem kann die Wasserhärte des im Kreislauf geführten Prozesswassers aufgrund der Enthärtung bzw. Entkalkung in dem Druckentspannungsflotationsschritt so gesteuert werden, dass in dem anaeroben Reaktor keine die darin enthaltenden Mikroorganismenpellets störenden Kalkablagerungen entstehen, wodurch die Effizienz des anaeroben Reaktors optimiert wird. Um eine ausreichende Entkalkung zu erreichen, erfordert dieses Verfahren allerdings den Einsatz großer Mengen von teurem Fällungsmitteln und Flockungshilfsmitteln. Aber selbst bei dem Einsatz großer Fällungsmittel- und Flockungshilfsmittelmengen ist der pro Reaktorvolumen und pro Zeiteinheit erreichte Entkalkungsgrad bei diesem Verfahren verbesserungsbedürftig.

In der KR 2001-0038791 wird ein Verfahren zur Reinigung von Prozesswasser offenbart, bei dem zunächst Abwasser bzw. Prozesswasser in einem anaeroben Reaktor behandelt wird, das so behandelte Abwasser bzw. Prozesswasser einem Entgasungsschritt unterzogen wird und anschließend in einem Absetzbehälter geführt wird, in dem in dem Abwasser bzw. Prozesswasser enthaltene Feststoffe, wie Kalk, abgetrennt werden.

Aus der KR 2006-0125981 A ist ein Verfahren zur Behandlung von Abwasser in der Papierindustrie bekannt, bei dem das zu behandelnde Abwasser zunächst einem anaeroben Reaktor zugeführt wird, bevor das so behandelte Abwasser einer Entgasungsvorrichtung und anschließend einer Feststoffentfernungseinrichtung zugeführt wird.

In der WO 2008/108599 A1 wird ein Verfahren zum Behandeln von Abwasser, welches Phosphor und/oder Stickstoff enthält, offenbart, bei dem das Abwasser in einem anaeroben Reaktor mit Mikroorganismen kontaktiert wird, bevor das aus dem anaeroben Reaktor-abgeführte Abwasser einer Kohlendioxidentstrippung unterzogen wird.

In der WO 2007/076943 A2 wird eine Anlage und ein Verfahren zur Aufbereitung von Prozesswasser bei der Papierherstellung offenbart, bei dem wenigstens ein Teil des Prozesswassers einem Reinigungsschritt in einem mit anaeroben Mikroorganismen versetzten anaeroben Reaktor sowie einem Entkalkungsschritt unterzogen wird. Dabei kann der Entkalkungsschritt gemäß einer Ausführungsform als Druckentspannungsflotationsschritt durchgeführt werden. Ein dazu ähnliches Verfahren ist aus der DE 10 2006 060 426 A1 bekannt.

Aufgabe der vorliegenden Erfindung ist es daher, ein Verfahren zur Aufbereitung von Prozesswasser bereitzustellen, bei dem das Prozesswasser effizient gereinigt wird, bei dem insbesondere die Wasserhärte und die Qualität des Prozesswassers gezielt gesteuert werden kann und welches insbesondere auch für die Aufbereitung von Prozesswasser mit einer hohen Wasserhärte, wie Prozesswasser in einer Anlage zur Herstellung von Papier aus Altpapier, geeignet ist, welches sich durch einen hohen Reinigungsgrad pro Reaktorvolumen und pro Zeiteinheit auszeichnet und welches insbesondere vergleichsweise geringe Mengen an Fällungsmittel und/oder Flockungshilfsmittel erfordert. Insbesondere soll das aufbereitete Prozesswasser so gereinigt sein, dass eine Störung des Betriebs eines anaeroben Reaktors durch Kalkausfällungen zuverlässig vermieden wird.

Erfindungsgemäß wird diese Aufgabe gelöst durch ein Verfahren nach Patentanspruch 1 und insbesondere durch ein Verfahren zur Reinigung von Prozesswasser, insbesondere zur kontinuierlichen Reinigung von Prozesswasser in der Papierindustrie, umfassend wenigstens einen Prozesswasseraufbereitungsschritt, welcher die nachfolgenden Schritte umfasst:
a) einen anaeroben Reinigungsschritt, bei dem zu reinigendes Prozesswasser in einem anaeroben Reaktor mit anaeroben Mikroorganismen kontaktiert wird, um in dem Abwasser enthaltene Verunreinigungen abzubauen,
b) einen ersten Trennschritt, bei dem aus dem in dem Schritt a) erhaltenen Prozesswasser selektiv in dem Prozesswasser enthaltene(s) Gas(e) abgetrennt wird/werden, wobei der erste Trennschritt b) in einem Stripbehälter durchgeführt wird, in dem das Prozesswasser im Gleichstrom oder im Gegenstrom mit Luft durch den Stripbehälter geführt wird und in dem das Prozesswasser und die Luft mittels einer Mischeinrichtung (126) miteinander vermischt werden und wobei bei dem ersten Trennschritt b) wenigstens 80 % des/der in dem Prozesswasser enthaltenen Gase(s) abgetrennt werden, und
c) einen zweiten Trennschritt, bei dem aus dem in dem Schritt b) erhaltenen Prozesswasser in dem Prozesswasser enthaltene Feststoffe mittels Druckentspannungsflotation abgetrennt werden, wobei bei der Druckentspannungsflotation die Druckdifferenz zwischen der Druckbeaufschlagung und der Entspannung auf wenigstens 2 bar eingestellt wird.

Bei dem aus dem anaeroben Reinigungsschritt abgezogenen Prozesswasser handelt es sich um ein Dreiphasengemisch, welches Wasser mit darin gelöst enthaltenden Ionen, wie Carbonat- und Hydrogencarbonationen, Feststoffe und in dem anaeroben Reaktor gebildete Gase, insbesondere durch die Mikroorganismen gebildetes CO₂, enthält. Bei dem ersten Trennschritt b) werden aus diesem Dreiphasengemisch zunächst selektiv die Gase abgetrennt, wohingegen die Feststoffe erst in dem zweiten Trennschritt c) aus dem Prozesswasser abgetrennt werden. Selektive Abtrennung von Gasen aus dem Prozesswasser (d.h. dem vorgenannten Dreiphasengemisch) bedeutet im Sinne der vorliegenden Erfindung, dass bei dem ersten Trennschritt b) prozentual mehr von dem/den in dem Prozesswasser enthaltenen Gas(en) abgetrennt wird/werden, als von den in dem Prozesswasser enthaltenen Feststoffen. Demnach bedeutet selektive Abtrennung von Gasen aus dem Prozesswasser im Sinne der vorliegenden Erfindung, dass bei dem ersten Trennschritt b), wenigstens 80 %, bevorzugt wenigstens 90 % und besonders bevorzugt wenigstens 95 % des/der in dem Prozesswasser enthaltenen Gase(s) abgetrennt werden, wohingegen bei diesem ersten Trennschritt b) maximal 30 %, bevorzugt maximal 20 %, insbesondere bevorzugt maximal 10 %, besonders bevorzugt maximal 5 % und ganz besonders bevorzugt maximal 1 % der in dem Prozesswasser (suspendiert) enthaltenen Feststoffe abgetrennt werden. Durch die Abtrennung des/der Gase(s) wird erreicht, dass ein erheblicher Teil der in dem Prozesswasser enthaltenen Ionen Feststoffe ausbildet, so dass das Prozesswasser nach dem ersten Trennschritt b), bezogen auf das Gesamtgewicht des Prozesswassers (zusammen mit den darin enthaltenden Fremdstoffen), einen höheren Feststoffanteil aufweist als vor dem ersten Trennschritt b). Dies liegt darin begründet, dass sich aufgrund der Entfernung von Gas aus dem Prozesswasser während des ersten Trennschritts b) das Gleichgewicht zwischen gelösten Ionen und Feststoff zugunsten des Feststoffs verschiebt, nämlich dass sich beispielsweise durch die Entfernung der Gase, insbesondere des in dem Prozesswasser enthaltenen Kohlendioxids, das Kalk-Kohlensäure-Gleichgewicht zugunsten des Feststoffs, also Kalk, verschiebt. Der so entstehende Feststoff wird zusammen mit dem ggf. bereits vor dem ersten Trennschritt b) in dem Prozesswasser enthaltenem Feststoff in dem zweiten Trennschritt c) aus dem Prozesswasser entfernt.

Durch diese Verfahrensführung wird insgesamt eine bessere Aufreinigung des Prozesswassers und insbesondere eine bessere Enthärtung des Prozesswassers pro Volumen der für die ersten und zweiten Trennschritte eingesetzten Vorrichtungen und pro Zeiteinheit erreicht. Aufgrund der dadurch erzielten Reinheit kann das Prozesswasser vollständig bzw. zumindest nahezu vollständig im Kreislauf geführt werden, ohne dass sich die Verunreinigungen durch die Kreislaufführung anreichern, was eine Minimierung des Frischwasserbedarfs der Anlage erlaubt. Zudem kann bei dem erfindungsgemäßen Verfahren die Wasserhärte in dem im Kreislauf geführten Prozesswasser so gesteuert werden, dass in dem anaeroben Reaktor keine nennenswerten Mengen von die darin enthaltenden Mikroorganismenpellets störenden Kalkablagerungen entstehen, wodurch die Effizienz des anaeroben Reaktors optimiert wird. Insgesamt ermöglicht die erfindungsgemäße Anlage somit eine zumindest nahezu vollständige Kreislaufführung des Prozesswassers und die effiziente Steuerung der Qualität des Prozesswassers. Ein weiterer Vorteil des erfindungsgemäßen Verfahrens gegenüber dem aus der WO 2007/076943 bekannten Verfahren liegt darin, dass bei dem erfindungsgemäßen Verfahren für einen zu erreichenden Aufreinigungsgrad des Prozesswassers weniger Fällungsmittel und Flockungshilfsmittel benötigt wird als bei dem aus der WO 2007/076943 bekannten Verfahren. Dadurch werden die Betriebskosten signifikant, und zwar um wenigstens 30 %, verringert. Zudem wird aufgrund des geringeren Einsatzes von Fällungsmittel und Flockungshilfsmittel die Betriebssicherheit des Verfahrens erhöht, weil die nachfolgenden Schritte nicht durch das Fällungsmittel und Flockungshilfsmittel belastet werden.

Gemäß der vorliegenden Erfindung wird der erste Trennschritt b) in einem Stripbehälter durchgeführt, in dem das Prozesswasser im Gleichstrom oder im Gegenstrom mit Luft durch den Stripbehälter geführt wird. Bei dieser Ausführungsform kann das Prozesswasser beispielsweise mit Luft im Gleichstrom von unten nach oben durch den Stripbehälter geführt werden und das Gas im oberen Bereich des Stripbehälters abgezogen werden. Alternativ dazu ist es auch möglich, das Prozesswasser von oben nach unten durch den Stripbehälter zu führen, Luft im Gegenstrom von unten nach oben durch den Stripbehälter zu führen und das Gas im oberen Bereich des Stripbehälters abzuziehen.

Um bei dem ersten Trennschritt b) eine wirksame Entfernung von Gas(en) aus dem Prozesswasser zu erreichen, hat es sich als vorteilhaft erwiesen, in dem Stripbehälter während der Durchführung des Prozesswassers und der Durchführung der Luft einen Unterdruck anzulegen. Vorzugsweise beträgt dieser Unterdruck gegenüber dem atmosphärischen Druck 10 bis 50 mbar, besonders bevorzugt 15 bis 25 mbar und ganz besonders bevorzugt etwa 20 mbar. Alternativ dazu ist jedoch auch möglich, wenn auch weniger bevorzugt, den ersten Trennschritt b) bei atmosphärischem Druck oder, wenn auch noch weniger bevorzugt, bei einem leichten Überdruck zu betreiben.

Zwecks Erreichen einer wirksamen Entfernung von Gas(en) und einer Vermeidung der Abtrennung von Feststoffen aus dem Prozesswasser wird gemäß der Vorliegenden Erfindung das Prozesswasser und die Luft bei dem ersten Trennschritt b) in dem Stripbehälter mittels einer Rühreinrichtung miteinander vermischt. Dabei kann als Rühreinrichtung jede dem Fachmann bekannte Mischeinrichtung eingesetzt werden, insbesondere ein dynamischer Mischer, wie beispielsweise ein Propellerrührer, oder ein statischer Mischer. Aufgrund der durch die Rühreinrichtung in das Prozesswasser (d.h. das Dreiphasengemisch) eingebrachten Energie wird das Austreiben von Gas(en) gefördert. Zudem wird durch die intensive Durchmischung des Feststoff enthaltenden Prozesswassers eine homogene Suspension erreicht, so dass zuverlässig verhindert wird, dass sich die in dem Prozesswasser suspendiert enthaltenen Feststoffe in dem Stripbehälter von dem Wasser, beispielsweise durch Absetzen, abtrennen.

Die vorgenannte Ausführungsform kann beispielsweise so durchgeführt werden, dass das Prozesswasser bei dem ersten Trennschritt b) von unten nach oben durch den Stripbehälter geleitet wird, dem Stripbehälter in seinem unteren Bereich Luft derart zugeführt wird, dass die Luft in Form von Luftblasen durch das Prozesswasser durchperlt, und das Prozesswasser und die Luftblasen in dem Stripbehälter mittels einer Rühreinrichtung miteinander vermischt werden.

Bei der vorgenannten Ausführungsform hat es sich insbesondere als vorteilhaft erwiesen, dem Stripbehälter die Luft derart zuzuführen, dass die durch das Prozesswasser hindurch perlenden Luftblasen eine durchschnittliche Größe von 150 bis 600 µm und bevorzugt von 200 bis 400 µm aufweisen.

Wie bereits dargelegt, wird durch die Entfernung bzw. das Austreiben von Gas aus dem Prozesswasser erreicht, dass während dem ersten Trennschritt b) in dem Prozesswasser aus den darin gelöst enthaltenen Ionen Feststoffe gebildet werden, welche in dem Prozesswasser suspendiert vorliegend verbleiben. Um die Feststoffbildung während des Verfahrensschritts b) zu begünstigen, kann dem Prozesswasser während dem ersten Trennschritt b) ein Fällungsmittel und/oder wenigstens ein Flockungshilfsmittel zugesetzt wird. Bei dieser Ausführungsform können alle dem Fachmann bekannten Fällungsmittel und/oder Flockungshilfsmittel eingesetzt werden. Gute Ergebnisse werden insbesondere erzielt, wenn das Fällungsmittel eine Base, wie Natriumhydroxid oder eine wässrige Natriumhydroxidlösung, also Natronlauge, ist. Alternativ dazu oder zusätzlich dazu kann als Fällungsmittel auch ein Aluminiumsalz, vorzugsweise Aluminiumsulfat, ein Eisensalz, vorzugsweise Eisensulfat, Polyaluminiumchlorid oder Natriumaluminat eingesetzt werden. Ein Beispiel für ein geeignetes Flockungshilfsmittel ist Polyacrylamid.

Vorzugsweise wird der pH-Wert des Prozesswasser bei dem ersten Trennschritt b) zur Begünstigung der Feststoffbildung auf 6,5 bis 10, bevorzugt auf 6,8 bis 9 und besonders bevorzugt auf 7,2 bis 8,2 eingestellt. Ein pH-Wert in einem der vorgenannten Bereiche fördert insbesondere die Bildung von Kalk aus den in dem Prozesswasser enthaltenen Hydrogencarbonat- und Carbonationen.

Erfindungsgemäß erfolgt die Abtrennung der Feststoffe in dem zweiten Trennschritt c) durch (feinblasige) Druckentspannungsflotation.

Bei der bei dem zweiten Trennschritt c) eingesetzten Druckentspannungsflotation wird dem zu behandelnden Prozesswasser, sofern dies nicht bereits bei dem vorangegangenen ersten Trennschritt b) erfolgt ist, vorzugsweise zunächst wenigstens ein Fällungsmittel und/oder wenigstens ein Flockungshilfsmittel zugesetzt, wobei durch die Zugabe des Fällungsmittels der pH-Wert des Prozesswassers auf einen Wert von 6,5 bis 10, bevorzugt von 6,8 bis 9 und besonders bevorzugt von 7,2 bis 8,2, eingestellt wird. Anschließend wird der so erzeugten Mischung Druckgas, vorzugsweise Druckluft, zugesetzt und wird diese Mischung mit Druck beaufschlagt, bevor die mit Druck beaufschlagte Mischung in einem Druckentspannungsflotationsreaktor entspannt bzw. einem verminderten Druck ausgesetzt wird, wodurch das vorher zugesetzte Druckgas zumindest weitestgehend in Form von Gasblasen aus dem Wasser ausperlt und nach oben strömt. Alternativ dazu kann dem Prozesswasser auch ein mit Druckgas versetztes Wasser zugegeben werden, welches nach der Zugabe zu dem Prozesswasser entspannt wird, so dass das Druckgas zumindest weitestgehend in Form von Gasblasen aus dem Wasser ausperlt und nach oben strömt. Dabei reißen die Gasblasen die in dem Wasser enthaltenen Feststoffflocken mit, so dass diese von dem Prozesswasser abgetrennt werden.

Um eine effiziente Feststoffabtrennung zu erreichen wird gemäß der vorliegenden Erfindung die Druckentspannungsflotationsvorrichtung so ausgelegt, dass die Druckdifferenz zwischen der Druckbeaufschlagung und der Entspannung wenigstens 2 bar, bevorzugt wenigstens 3 bar, besonders bevorzugt wenigstens 4 bar und ganz besonders bevorzugt wenigstens 5 bar beträgt. Je größer die vorgenannte Druckdifferenz, desto kleiner sind die bei der Entspannung entstehenden Gasperlen, so dass aufgrund des größeren Oberflächen- zu Volumenverhältnisses der Gasblasen eine erhöhte Kalkabtrennung erreicht wird.

Gemäß einer weiteren bevorzugten Ausführungsform wird dem Prozesswasser nach dem zweiten Trennschritt c) ein Teilstrom entnommen, wird dieser Teilstrom mit dem Prozesswasser nach dem anaeroben Reinigungsschritt a) vermischt und wird die so erhaltene Mischung dem ersten Trennschritt b) unterworfen.

Alternativ dazu oder zusätzlich dazu ist es auch möglich, einen Teil des bei dem zweiten Trennschritt c) anfallenden Feststoffs mit dem Prozesswasser nach dem anaeroben Reinigungsschritt a) zu vermischen und die so erhaltene Mischung dem ersten Trennschritt b) zu unterwerfen. Dabei dient der Teil der zurückgeführten Feststoffe in dem Verfahrensschritt b) als Kristallisationskeime für die aus den in dem Prozesswasser enthaltenen Ionen zu bildenden Feststoffe.

Grundsätzlich kann das erfindungsgemäße Verfahren zur Reinigung von jeglichem in einer Anlage im Kreislauf geführten Prozesswasser eingesetzt werden. Insbesondere bei der Papierherstellung wird das Prozesswasser mit signifikanten Mengen an Verunreinigungen belastet, weswegen das erfindungsgemäße Verfahren insbesondere zur Reinigung von bei der Papierherstellung anfallendem Prozesswasser geeignet ist, unabhängig davon, ob es sich um Prozesswasser einer Anlage zur Herstellung von Papier aus Frischfasern oder um Prozesswasser einer Anlage zur Herstellung von Papier aus Altpapier handelt.

Bei der vorgenannten Ausführungsform kommt das dem Prozesswasseraufbereitungsschritt zugeführte Prozesswasser aus einer Stoffaufbereitungsvorrichtung und/oder aus einer Papiermaschine.

Vorzugsweise kommt das dem Prozesswasseraufbereitungsschritt kontinuierlich zugeführte Prozesswasser bei dieser Ausführungsform aus wenigstens einer Stufe einer Altpapieraufbereitungsvorrichtung und/oder einer Papiermaschine.

Ein weiterer Gegenstand der vorliegenden Erfindung ist eine Anlage zur Reinigung von Prozesswasser, insbesondere zur kontinuierlichen Reinigung von Prozesswasser in der Papierindustrie, welche wenigstens eine Prozesswasseraufbereitungseinheit aufweist, wobei die Prozesswasseraufbereitungseinheit umfasst:
i) einen Reaktor zur anaeroben Reinigung von Prozesswasser mit wenigstens einer Zufuhrleitung zur Zuführung von zu reinigendem Prozesswasser in den Reaktor sowie wenigstens einer Abfuhrleitung zur Abführung von gereinigtem Prozesswasser aus dem Reaktor,

Prinzipiell kann als Rühreinrichtung jede Mischeinrichtung, insbesondere ein dynamischer Mischer oder ein statischer Mischer, eingesetzt werden.

Vorzugsweise umfasst die erste Trennvorrichtung einen Stripbehälters, in dessen unteren Bereich die Zufuhrleitung für Prozesswasser und die Gaszufuhrleitung münden und in dessen oberen Bereich die Gasabfuhrleitung angeordnet ist.

Gemäß einer weiteren bevorzugten Ausführungsform weist die erste Trennvorrichtung wenigstens eine Zufuhrleitung für ein Fällungsmittel und/oder für ein Flockungshilfsmittel auf.

Erfindungsgemäß umfasst die zweite Trennvorrichtung eine Druckentspannungsflotationsvorrichtung.
ii) eine stromabwärts des anaeroben Reaktors (125a, 125b, 225) angeordnete erste Trennvorrichtung (130a, 130b, 230) zur selektiven Abtrennung von Gasen aus dem Prozesswasser, wobei die erste Trennvorrichtung (130a, 130b, 230) eine mit der Abfuhrleitung des anaeroben Reaktors (125a, 125b, 225) verbundene Zufuhrleitung (129) für Prozesswasser, eine Gaszufuhrleitung (127), eine Gasabfuhrleitung (131) und eine Mischeinrichtung (126) aufweist, und wobei die erste Trennvorrichtung (130a, 130b, 230) einen Stripbehälter umfasst, und
iii) eine stromabwärts der ersten Trennvorrichtung (130a, 130b, 230) angeordnete, mit der ersten Trennvorrichtung (130a, 130b, 230) über eine Leitung (134) verbundene zweite Trennvorrichtung (140a, 140b, 240) zur Abtrennung von Feststoffen aus dem Prozesswasser, wobei die zweite Trennvorrichtung (140a, 140b, 240) eine Druckentspannungsflotationsvorrichtung umfasst, welche so ausgelegt ist, dass die Druckdifferenz zwischen der Druckbeaufschlagung und der Entspannung wenigstens 2 bar beträgt.

An der zweiten Trennvorrichtung ist vorzugsweise eine Teilstromrückführleitung für Prozesswasser vorgesehen, welche in die zu der ersten Trennvorrichtung führende Zufuhrleitung für Prozesswasser mündet.

Alternativ dazu oder zusätzlich dazu kann an der zweiten Trennvorrichtung eine Teilstromrückführleitung für Feststoff vorgesehen ist, welche in die zu der ersten Trennvorrichtung führende Zufuhrleitung für Prozesswasser mündet. Die über diese Teilstromrückführleitung zurückgeführten Feststoffe wirken in der ersten Trennvorrichtung als Kristallisationskeime.

Grundsätzlich kann die Anlage zur Reinigung von Prozesswasser gemäß der vorliegenden Erfindung in jeder Anlage integriert sein, in der Prozesswasser im Kreislauf geführt wird. Insbesondere bei der Papierherstellung wird das Prozesswasser mit signifikanten Mengen an Verunreinigungen belastet, weswegen die erfindungsgemäße Anlage insbesondere zur Reinigung von bei der Papierherstellung anfallenden Prozesswasser geeignet ist, unabhängig davon, ob es sich um Prozesswasser einer Anlage zur Herstellung von Papier aus Frischfasern oder um Prozesswasser einer Anlage zur Herstellung von Papier aus Altpapier handelt.

In diesem Fall umfasst die erfindungsgemäße Anlage neben wenigstens einer Prozesswasseraufbereitungseinheit wenigstens eine Stoffaufbereitungsvorrichtung und/oder wenigstens eine Papiermaschine, wobei der wenigstens einen Stoffaufbereitungsvorrichtung und/oder der wenigstens einen Papiermaschine wenigstens eine der Prozesswasseraufbereitungseinheiten zugeordnet ist/sind.

Insbesondere wenn es sich bei der erfindungsgemäßen Anlage um eine Anlage zur Herstellung von Papier aus Altpapier handelt, weist diese vorzugsweise eine Altpapieraufbereitungsvorrichtung als Stoffaufbereitungsvorrichtung zur Herstellung von Faserstoff aus dem Altpapier und/oder eine Papiermaschine zur Herstellung von Papier aus dem Faserstoff auf, wobei die Altpapieraufbereitungsvorrichtung eine oder mehrere Stufen aufweist und wenigstens eine dieser Stufen und/oder die Papiermaschine eine eigene Prozesswasseraufbereitungseinheit umfassen. Insbesondere, wenn die Papiermaschine und jede Stufe bzw. jeder Loop der Altpapieraufbereitungsvorrichtung eine Prozesswasseraufbereitungseinheit enthalten, kann die Prozesswasserqualität, also die Menge der in dem Prozesswasser enthaltenen Verunreinigungen, für jeden Loop separat gesteuert werden. Hierdurch wird ein optimales Qualitäts-Wasser-Management bei der Papierherstellung aus Altpapier ermöglicht.

Um eine effiziente Ausnutzung des in der Anlage eingesetzten Altpapiers sowie der darin enthaltenen Fasern zu erreichen, wird es in Weiterbildung des Erfindungsgedankens vorgeschlagen, in der wenigstens einen Prozesswasseraufbereitungseinheit des weiteren eine Stoffrückgewinnungseinheit und/oder eine Entstoffungseinheit vorzusehen. Gute Ergebnisse werden insbesondere erreicht, wenn die Stoffrückgewinnungseinheit bzw. die Entstoffungseinheit als eine Kombination von Stoffrückgewinnungsvorrichtung (z.B. eine Vorrichtung mit Siebbarriere) und Mikroflotationsvorrichtung (oder Druckentspannungsflotationsvorrichtung) in Serie als Kaskade ausgebildet ist. In der ersten Stufe, welche vorzugsweise als Sprühfiltration ausgebildet ist, werden die brauchbaren Fasern zurückgewonnen, wohingegen in der zweiten Stufe, nämlich der Entstoffung, die Feinstoffe aus dem Prozesswasser entfernt werden.

Gemäß einer weiteren bevorzugten Ausführungsform umfasst die wenigstens eine Prozesswasseraufbereitungseinheit ferner eine separate, der zweiten Trennvorrichtung nach geschaltete Filtrationseinheit, um in dem Prozesswasser enthaltene feine Feststoffpartikel abzutrennen. Diese Filtrationseinheit ist vorzugsweise stromabwärts des anaeroben Reaktors und stromabwärts der beiden Trennvorrichtungen angeordnet.

Als mit anaeroben Mikroorganismen versetzter anaerober Reaktor können alle dem Fachmann bekannten Typen an anaeroben Reaktoren eingesetzt werden, beispielsweise Kontaktschlammreaktoren, UASB-Reaktoren, EGSB-Rcaktoren, Festbettreaktoren und Fließbettreaktoren, wobei insbesondere mit UASB-Reaktoren und EGSB-Reaktoren gute Ergebnisse erzielt werden. Dem anaeroben Reaktor kann ein Vorversäuerungsreaktor vorgeschaltet sein, in dem das Prozesswasser vor der Zuführung in den anaeroben Reaktor einer Acidogenese und/oder einer Hydrolyse unterworfen wird. Während bei der enzymatischen Hydrolyse Polymere, wie beispielsweise Polysaccharide, Polypeptide und Fette, durch aus Mikroorganismen stammende Exoenzyme zu deren Monomeren, wie Zucker, Aminosäuren und Fettsäuren, abgebaut werden, werden diese Monomere bei der Acidogenese durch acidogene Mikroorganismen in organischer Säuren, Alkohole, Aldehyde, Wasserstoff und Kohlendioxid umgewandelt.

Vorzugsweise enthält die Stoffaufbereitungsvorrichtung der Anlage eine oder mehrere Stufen, wobei insbesondere mit 1 bis 3 Stoffaufbereitungsstufen umfassenden Anlagen gute Ergebnisse erzielt werden, wobei die einzelnen Stufen untereinander vorzugsweise durch eine Entwässerungsstufe voneinander entkoppelt sind. Besonders bevorzugt umfasst die Stoffaufbereitungsvorrichtung zwei voneinander entkoppelte Stufen. In dem Fall einer Anlage zur Herstellung von Papier aus Altpapier, bei der die Stoffaufbereitungsvorrichtung als Altpapieraufbereitungsvorrichtung ausgestaltet ist, ist/ sind die Stoffaufbereitungsstufen als Altpapieraufbereitungsstufen ausgebildet.

Unabhängig von der Anzahl der Stufen der Stoffaufbereitungsvorrichtung ist es gemäß einer weiteren bevorzugten Ausführungsform der vorliegenden Erfindung vorgesehen, dass bei einer Anlage zur Herstellung von Papier sowohl wenigstens eine der Stufen der Stoffaufbereitungsvorrichtung als auch die Papiermaschine jeweils eine eigene Prozesswasseraufbereitungseinheit umfassen, wobei die Prozesswasseraufbereitungseinheiten jeweils einen anaeroben Reaktor, eine erste Trennvorrichtung und eine zweite Trennvorrichtung aufweisen.

In Weiterbildung des Erfindungsgedankens wird vorgeschlagen, dass alle Stufen der Stoffaufbereitungsvorrichtung und die Papiermaschine jeweils eine eigene Prozesswasseraufbereitungseinheit umfassen, wobei die Prozesswasseraufbereitungseinheiten jeweils einen anaeroben Reaktor, eine erste Trennvorrichtung und eine zweite Trennvorrichtung aufweisen. Auf diese Weise kann die Prozesswasserqualität, also die Menge der in dem Prozesswasser enthaltenen Verunreinigungen, für jeden Loop separat gesteuert werden. Hierdurch wird ein optimales Qualitäts-Wasser-Management bei der Papierherstellung ermöglicht.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische Ansicht einer Anlage zur Herstellung von Papier aus Altpapier gemäß eines Ausführungsbeispiels der vorliegenden Erfindung,
- Fig. 2: eine schematische Ansicht der Prozesswasseraufbereitungseinheit der in der Fig. 1 dargestellten Anlage und
- Fig. 3: eine schematische Ansicht einer Prozesswasseraufbereitungseinheit gemäß eines anderen Ausführungsbeispiels der vorliegenden Erfindung.

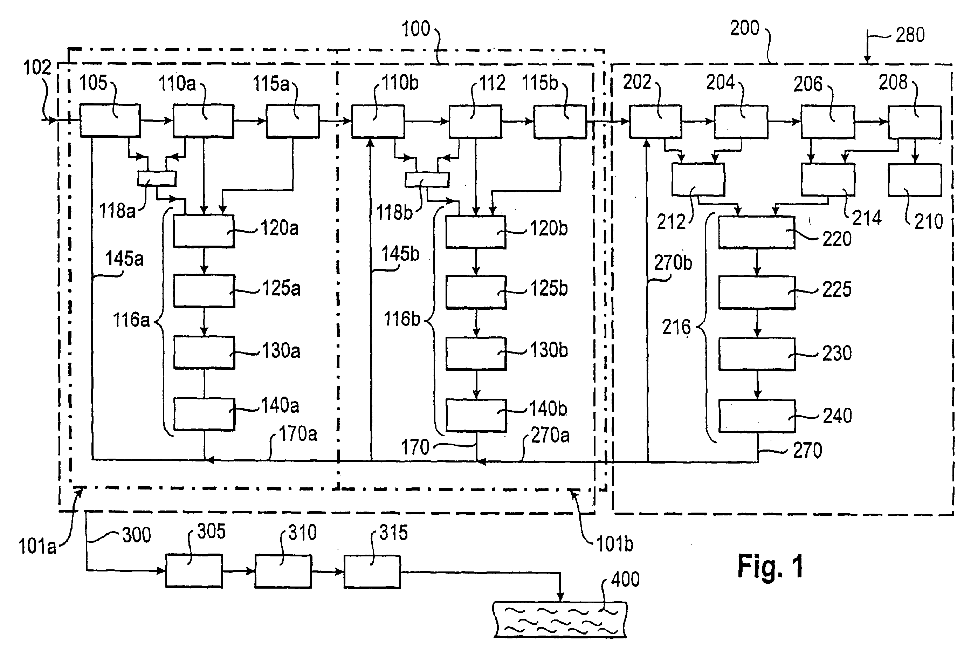

Die in der Fig. 1 gezeigte Anlage umfasst eine Altpapieraufbereitungsvorrichtung 100 sowie eine stromabwärts davon angeordnete, mit der Altpapieraufbereitungsvorrichtung 100 verbundene Papiermaschine 200. Dabei umfasst die Altpapieraufbereitungsvorrichtung 100 zwei voneinander im Wesentlichen entkoppelte und in der Fig. 1 durch die punktgestrichelten Kästen angedeutete Stufen bzw. Loops 101a und 101b.

Die erste Stufe 101a der Papieraufbereitungsvorrichtung 100 umfasst einen Rohstoffeinlass 102, einen Pulper bzw. Stoffauflöser 105, eine Sortiereinrichtung 110a sowie eine Entwässerungseinheit 115a, welche sequentiell angeordnet und jeweils miteinander verbunden sind. Unter Pulper bzw. Stoffauflöser 105 wird im Sinne der vorliegenden Erfindung nicht nur eine, wie in der Fig. 1 schematisch gezeigt, aus einem Vorrichtungsteil bestehende Einrichtung verstanden, sondern insbesondere auch eine mehrere einzelne Vorrichtungsteile umfassende Vorrichtungskombination, welche alle für die Stoffauflösung notwendigen Bauteile bzw. Aggregate beinhaltet. Gleiches gilt auch für die Sortiereinrichtung 110a, die Entwässerungseinheit 115a und alle anderen in der Fig. 1 gezeigten Bauteile. Der Stoffauflöser 105 und die Sortiereinrichtung 110a sind jeweils über eine Leitung mit einer Rejektbehandlungseinheit 118a verbunden.

Zudem umfasst die erste Stufe 101a der Altpapieraufbereitungsvorrichtung 100 eine Prozesswasseraufbereitungseinheit 116a, der über entsprechende Leitungen aus der Rejektbehandlungseinheit 118a, aus der Sortiervorrichtung 110a sowie aus der Entwässerungseinheit 115a das in diesen Anlagenteilen anfallende Prozesswasser zugeführt wird. Dabei kann die Sortiervorrichtung 110a auch eine Reihe von Sortiereinrichtungen (nicht dargestellt) umfassen. Die Prozesswasseraufbereitungseinheit 116a besteht aus einer Stoffrückgewinnungseinheit 120a, einem mit anaeroben Mikroorganismen versetzten anaeroben Reaktor 125a, einer ersten Trennvorrichtung 130a sowie einer zweiten Trennvorrichtung 140a, welche sequentiell angeordnet und miteinander verbunden sind. Von der zweiten Trennvorrichtung 140a führt eine Rückführleitung 145a zu dem Stoffauflöser 105 zurück. Zusätzlich zu der Stoffrückgewinnungseinheit 120a oder anstelle der Stoffrückgewinnungseinheit 120a kann in der Altpapieraufbereitungsvorrichtung 100 eine Entstoffungseinheit (nicht dargestellt) vorgesehen sein.

Im Unterschied zu der ersten Stufe 101a umfasst die zweite Stufe 101b der Altpapieraufbereitungsvorrichtung 100 eine mit der Entwässerungseinheit 115a verbundene Sortiervorrichtung 110b, eine Oxidationseinheit bzw. Reduktionseinheit 112 sowie eine Entwässerungseinheit 115b, welche sequentiell angeordnet und miteinander verbunden sind. Zudem weist zweite Stufe 101b eine Prozesswasseraufbereitungseinheit 116b auf, welche analog zu der Prozesswasseraufbereitungseinheit 116a der ersten Stufe 101a aufgebaut ist, wobei die zweite Trennvorrichtung 140b der zweiten Stufe 101b der Altpapieraufbereitungsvorrichtung 100 über eine Rückführleitung 145b mit der Sortiervorrichtung 110b und über eine Teilstromleitung 170a mit der aus der zweiten Trennvorrichtung 140a kommenden Rückführleitung 145a der ersten Stufe 101 a der Altpapieraufbereitungsvorrichtung 100 verbunden ist. Während die Sortiervorrichtung 110b und die Oxidationseinheit bzw. Reduktionseinheit 112 über entsprechende Leitungen mit einer Rejektbehandlungseinheit 118b verbunden sind, ist die Entwässerungseinheit 115b direkt mit der Stoffrückgewinnungseinheit 120b der Prozesswasseraufbereitungseinheit 116b verbunden. Zudem führt eine Leitung von der Oxidationseinheit bzw. Reduktionseinheit 112 zu der Stoffrückgewinnungseinheit 120b.

Die Papiermaschine 200 umfasst einen Zentrifugalsortierer 202, eine Feinsortiervorrichtung 204, eine Papiermaschinen-Formpartie 206, eine Papiermaschinen-Presspartie 208 sowie eine Trockenpartie 210, welche sequentiell angeordnet und miteinander verbunden sind. Der Zentrifugalsortierer 202 sowie die Feinsortiervorrichtung 204 sind mit einer Rejektbehandlungseinheit 212 verbunden und die Papiermaschinen-Formpartie 206 sowie die Papiermaschinen-Presspartie 208 sind mit einer Faserrückgewinnungseinheit 214 verbunden. Zudem sind die Rejektbehandlungseinheit 212 sowie die Faserrückgewinnungseinheit 214 über entsprechende Leitungen mit einer Prozesswasseraufbereitungseinheit 216 verbunden, welche aus einer Entstoffungseinheit 220, einem mit anaeroben Mikroorganismen versetzten anaeroben Reaktor 225, einer ersten Trennvorrichtung 230 und einer zweiten Trennvorrichtung 240 besteht. Zudem führt eine Rückführleitung 270 von der Filtrationseinheit 240 der Papiermaschine 200 in die Leitung 170 der zweiten Stufe 101b der Altpapieraufbereitungsvorrichtung 100. Die Faserrückgewinnungseinheit 214 und die Entstoffungseinheit 220 können auch in einem beispielsweise als Mikroflotation ausgebildeten Vorrichtungsteil kombiniert sein.

Ferner ist in dem Bereich der Papiermaschine 200 eine Frischwasserzufuhrleitung 280 vorgesehen, über welche der Papiermaschine Frischwasser zugeführt werden kann. Dabei kann die Frischwasserzufuhrleitung 280 an verschiedenen Stellen in der Papiermaschine 200 münden, beispielsweise in der Zufuhrleitung zu dem Zentrifugalsortierer 202 und/oder in der Papiermaschinen-Formpartie 206 und/oder der Papiermaschinen-Presspartie 208, weswegen die genaue Position der Frischwasserzufuhrleitung 280 in der Fig. 1 nicht dargestellt ist. Zudem ist in der Anlage eine Abwasserleitung 300 vorgesehen, über die Abwasser aus der Anlage abgeführt werden kann. Auch die Abwasserleitung 300 kann an verschiedenen Positionen der Anlage angeordnet sein, beispielsweise an der Leitung 170, weswegen auch die genaue Position der Abwasserleitung 300 in der Fig. 1 nicht dargestellt ist. Die Abwasserleitung 300 führt in eine mechanische Entstoffungseinheit 305, der eine Kühleinheit 310 sowie eine biologische Abwasserreinigungseinheit 315 nachgeschaltet ist. Von der biologischen Abwasserreinigungseinheit 315, welche eine Kalkeliminationseinheit und eine Filtrationseinheit umfassen kann, führt eine Leitung in ein öffentliches Gewässer 400, beispielsweise in einen Fluss; es kann jedoch auch ein Telstrom hiervon bei Bedarf in die Papiermaschine oder die Stoffaufbereitung zurückgeführt werden.

Beim Betrieb der Anlage wird kontinuierlich Altpapier über den Rohstoffeinlass 102 in den Stoffauflöser 105 der ersten Stufe 101a der Altpapieraufbereitungsvorrichtung 100 eingeführt, in dem das Altpapier mit über die Rückführleitung 145a zugeführten Prozesswasser vermischt und zur Gewinnung der Fasern zerkleinert wird. Während die in dem Stoffauflöser 105 gewonnenen Fasern als Fasersuspension kontinuierlich in die Sortiervorrichtung 110a überführt werden, wird das in dem Stoffauflöser 105 anfallende Prozesswasser, welches Reste an Fasern enthalten kann, zunächst in die Rejektbehandlungseinheit 118a geführt und von dort nach Abtrennung der Rejekte in die Stoffrückgewinnungseinheit 120a der Prozesswasseraufbereitungseinheit 116a der Altpapieraufbereitungsvorrichtung 100 geleitet. In der Sortiervorrichtung 110a werden aus der Fasersuspension, beispielsweise durch Siebbarrieren und typischerweise mehrstufig, leichte oder schwere Ungehörigkeiten, welche größer als Fasern sind, wie beispielsweise grobe Verschmutzungen in Form von Kunststofffolien und Kunststoffstücken, aussortiert. Zudem kann in der Sortiervorrichtung 110a auch eine Flotation zum Zweck der Elimination von Pigmenten, Tinte und Farbpartikeln (de-inking) durchgeführt werden. Zudem können bei der Stoffwäsche Feinstoffe und Asche abgetrennt werden. In der stromabwärts der Sortiervorrichtung 110a angeordneten Entwässerungseinheit 115a, welche vorzugsweise als Entwässerungsfilter und/oder als Schneckenpresse ausgebildet ist, wird die Fasersuspension durch Entfernen von Prozesswasser eingedickt, um als eingedickte Fasersuspension von der Entwässereinheit 115a in die Sortiervorrichtung 110b der zweiten Stufe 101b der Altpapieraufbereitungsvorrichtung 100 zu gelangen. Ein Teilstrom des in der Sortiervorrichtung 110a anfallenden Prozesswassers wird in die Rejektbehandlungseinheit 118a geführt, wohingegen der andere Teilstrom des in der Sortiervorrichtung 110a anfallenden Prozesswassers zusammen mit dem in der Entwässerungseinheit 115a der ersten Stufe 101a anfallenden Prozesswasser über entsprechende Leitungen direkt in die Stoffrückgewinnungseinheit 120a der Prozesswasseraufbereitungseinheit 116a der ersten Stufe 101a der Altpapieraufbereitungsvorrichtung 100 geführt wird, in der aus dem Prozesswasser darin enthaltene Faserstoffe abgetrennt werden, welche erneut dem Aufbereitungsprozess zugeführt werden. Vorzugsweise ist die Stoffrückgewinnungseinheit 120a als Druckentspannungsflotationsvorrichtung ausgestaltet.

Alternativ dazu kann ein Teilstrom des aus der Entwässerungseinheit 115a abgezogenen Prozesswassers oder das gesamte aus der Entwässerungseinheit 115 a abgezogene Prozesswasser direkt, d.h. unter Umgehung der Prozesswasseraufbereitungseinheit 116a, in den Stoffauflöser. 105 zurückgeleitet werden. Insbesondere bei der Papieraufbereitung, bei der das Prozesswasser eine geringe Feststoffkonzentration aufweist, wie beispielsweise bei der Herstellung von graphischem Papier, kann die Stoffrückgewinnungseinheit 120a, 120b bzw. Entstoffungseinheit 122, 220 entfallen.

Bei der in der Fig. 1 dargestellten Anlage wird das in der Rejektbehandlungseinhcit 118a anfallende Prozesswasser in die Stoffrückgewinnungseinheit 120a geleitet. Alternativ dazu ist es jedoch auch möglich, dass in der Rejektbehandlungseinheit 118a anfallende Prozesswasser als Abwasser aus der Altpapieraufbereitungsvorrichtung 101a abzuführen und beispielsweise über die Abwasserleitung 300 in die mechanische Entstoffungseinheit 305 und anschließend durch die Kühleinheit 310 sowie die biologische Abwasserreinigungseinheit 315 zu führen.

Von der Stoffrückgewinnungseinheit 120a wird kontinuierlich von Faserstoffen befreites Prozesswasser in den mit anaeroben Mikroorganismen versetzten anaeroben Reaktor 125a geleitet, in dem gelöste oder kolloidal gelöste organische Stoffe durch die Wirkung der anaeroben Mikroorganismen in dem Prozesswasser abgebaut werden. Dabei kann dem anaeroben Reaktor 125a zwecks Einstellung des Prozesswassers auf einen optimalen Temperaturbereich eine Kühlstufe (nicht dargestellt) und ein Vorversäuerungsreaktor (nicht dargestellt), in dem das Prozesswasser einer Acidogenese und/oder Hydrolyse unterworfen wird, vorgeschaltet sein. Aus dem anaeroben Reaktor 125a wird das so von den chemischen und biologischen Verunreinigungen befreite Prozesswasser in die stromabwärts gelegene erste Trennvorrichtung 130a geleitet, welche vorzugsweise als Stripbehälter ausgestaltet ist, dem beispielsweise von unten das Prozesswasser aus dem anaeroben Reaktor 125a zugeführt wird, welches in dem Stripbehälter im Gegenstrom mit dem Stripbehälter von oben zugeführter Luft kontaktiert wird, wobei der Stripbehälter eine Rühreinrichtung zur intensiven Vermischung des Prozesswassers und der Luft aufweist. In der ersten Trennvorrichtung 130a werden die in dem Prozesswasser enthaltenen Gase aus dem Prozesswasser ausgetrieben und so von dem Prozesswasser abgetrennt und werden die in dem Prozesswasser enthaltenen Ionen, beispielsweise die Carbonat- und Hydrogencarbonationen, weitestgehend als Feststoffe, beispielsweise als Calciumcarbonat, ausgefällt. Die Feststoffausfällung erfolgt dabei in der ersten Trennvorrichtung 130a durch die Verschiebung des Gleichgewichts zwischen Ionen und Feststoffen, wie des Kalk-Kohlensäure-Gleichgewichts, infolge der Entfernung der Gase aus dem Prozesswasser, wobei diese Gleichgewichtsverschiebung durch die Zudosierung geeigneter Chemikalien, insbesondere eines Fällungsmittels, beispielsweise einer Base, durch die der pH-Wert des Prozesswassers auf einen neutralen oder alkalischen Wert, welcher vorzugsweise zwischen 6,5 und 10, besonders bevorzugt zwischen 6,8 und 9 und ganz besonders bevorzugt zwischen 7,2 und 8,2 beträgt, eingestellt wird, begünstigt werden kann. Zudem können dem Prozesswasser zu diesem Zweck auch Flockungshilfsmittel zugesetzt werden, um die Ausfällung von Feststoffen und die Bildung von Feststoffflocken mit einer für eine effektive Abtrennung geeigneten Größe weiter zu erleichtern. Durch die intensive Vermischung des Prozesswassers und der Feststoffe durch die Rühreinrichtung in der ersten Trennvorrichtung 130a wird in dem Stripbehälter eine homogene Suspension erhalten, weswegen in dem Stripbehälter keine nennenswerte Abtrennung von Feststoffen aus dem Prozesswasser, beispielsweise durch Absetzen der Feststoffe oder durch Flotation, stattfindet. Von der ersten Trennvorrichtung 130a wird das die Feststoffe suspendiert enthaltende Prozesswasser der zweiten Trennvorrichtung 140a zugeführt, welche beispielsweise als Druckentspannungsflotationseinheit oder als Filtrationseinheit ausgebildet ist, um die Feststoffe aus dem Prozesswasser abzutrennen. Zudem kann der zweiten Trennvorrichtung 140a eine Entsalzungseinheit (nicht dargestellt) nachgeschaltet sein.

Über die Rückführleitung 145a wird das in der Prozessaufbereitungseinheit 116a der ersten Stufe 101a der Altpapieraufbereitungsvorrichtung 100 gereinigte Prozesswasser in den Pulper bzw. Stoffauflöser 105 zurückgeführt.

Die aus der Entwässerungseinheit 115a der ersten Stufe 101a der Altpapieraufbereitungsvorrichtung 100 abgeführte, eingedickte Fasersuspension gelangt in die Sortierstufe 110b und von dort in eine Oxidationseinheit bzw. Reduktionseinheit 112, bevor die Fasersuspension in der Entwässerungseinheit 115b der zweiten Stufe 101b eingedickt wird, um aus der Fasersuspension so viel wie möglich des Prozesswassers zu entfernen. Analog zu der ersten Stufe 101a der Altpapieraufbereitungsvorrichtung 100 wird das in der Sortiervorrichtung 110b anfallende Prozesswasser und ein Teilstrom des in der Oxidationseinheit bzw. Reduktionseinheit 112 anfallenden Abwassers in die Rejektbehandlungseinheit 118b geführt und das dort anfallende Prozesswasser in die Stoffrückgewinnungseinheit 120b geleitet. Der andere Teilstrom des in der Oxidationseinheit bzw. Reduktionseinheit 112 anfallenden Prozesswassers sowie das in der Entwässerungseinheit 115b anfallende Prozesswasser werden direkt in die Stoffrückgewinnungseinheit 120b der Prozesswasseraufbereitungseinheit 116b der zweiten Stufe 101b der Altpapieraufbereitungsvorrichtung 100 geleitet und in der Prozesswasseraufbereitungseinheit 116b gereinigt sowie entkalkt. Das so behandelte Prozesswasser gelangt von der zweiten Trennvorrichtung 140b über die Leitung 170 und die Rückführleitung 145b größtenteils in die Sortiervorrichtung 110b zurück, wohingegen ein möglicher Überschuss an Prozesswasser über die Teilstromleitung 170a zu der ersten Stufe 101a der Altpapieraufbereitungsvorrichtung 100 zurückgeführt und in die zu dem Stoffauflöser 105 führende Rückführleitung 145a geleitet wird.

In der Papiermaschine 200 wird die kontinuierlich aus der Entwässerungseinheit 115b zugeführte, eingedickte Faserstoffsuspension mittels des Zentrifugalsortierers 202, in dem Teile mit einem höheren oder niedrigen spezifischen Gewicht als Wasser abgetrennt werden, der Feinsortiervorrichtung 204, der Papiermaschinen-Formpartie 206, der Papiermaschinen-Presspartie 208 und der Trockenpartie 210 zu Papier verarbeitet. Während das in den Anlagenteilen 202 und 204 anfallende Prozesswasser in die Rejektbehandlungseinheit 212 geführt wird, wird das in den Anlagenteilen 206 und 208 anfallende Prozesswasser in die Faserrückgewinnungseinheit 214 geleitet. Während die Rejekte in der Rejektbehandlungseinheit 212 entwässert werden, wird in der Faserrückgewinnungseinheit 214 das aus der Papiermaschinen-Formpartie 206 und der Papiermaschinen-Presspartie 208 stammende Prozesswasser vorentstofft und aus diesem Fasern abgetrennt. In der Rejektbehandlungseinheit 212 sowie in der Faserrückgewinnungseinheit 214 anfallendes Prozesswasser wird kontinuierlich in die Prozesswasseraufbereitungseinheit 216 der Papiermaschine 200 geleitet und durchströmt dort sequentiell die Entstoffungseinheit 220, den anaeroben Reaktor 225, die erste Trennvorrichtung 230 und die zweite Trennvorrichtung 240, welche wie die zuvor beschriebenen entsprechenden Anlagenteile der Prozesswasseraufbereitungseinheiten 116a, 116b der Altpapieraufbereitungsvorrichtung 100 arbeiten. Alternativ dazu kann das in der Rejektbehandlungseinheit 212 anfallende Prozesswasser als Abwasser aus der Anlage abgeführt werden und nur das in der Faserrückgewinnungseinheit 214 anfallende Prozesswasser kontinuierlich durch die Prozesswasseraufbereitungseinheit 216 der Papiermaschine 200 geleitet werden. Das aus der zweiten Trennvorrichtung 240 abgezogene, gereinigte Prozesswasser wird über die Rückführleitung 270 und die Teilstromleitung 270b größtenteils in den Zentrifugalsortierer 202 der Papiermaschine 200 zurückgeleitet, wohingegen ein möglicher Überschuss an Prozesswasser über die Teilstromleitung 270a in die aus der zweiten Trennvorrichtung 140b der zweiten Stufe 101b der Altpapieraufbereitungsvorrichtung 100 kommende Leitung 170 geleitet wird.

Ein vollkommen geschlossener Prozesswasserkreislauf wäre zwar grundsätzlich möglich, würde aber auf lange Sicht zu Anreicherungen von Störstoffen führen, die letztendlich die Wirtschaftlichkeit der Anlage beeinträchtigen würden. Daher wird dem Prozess, vorzugsweise der Papiermaschine 200, über die Frischwasserzufuhrleitung 280 kontinuierlich ein, bezogen auf die Menge an im Kreislauf geführten Prozesswasser, relativ geringer Anteil an Frischwasser zugeführt. Eine entsprechende Menge an Prozesswasser wird über die Abwasserleitung 300 aus dem Prozess entfernt und über die Entstoffungseinheit 305, die Kühleinheit 310 und die biologische Abwasserreinigungseinheit 315, welche auch eine Kalkeliminationseinheit und/oder Filtrationseinheit umfassen kann, weiter aufgereinigt, bevor dieser Strom als Abwasser in öffentliche Gewässer 400 abgeleitet wird. Zudem kann auch das, wie vorstehend erwähnt, optional aus den Rejektbehandlungseinheiten 118a, 118b, 212 abgeführte Abwasser über die Abwasserleitung 300 aus dem Prozess entfernt und über die Entstoffungseinheit 305, die Kühleinheit 310 und die biologische Abwasserreinigungseinheit 315 aufgereinigt werden.

Bei der in der Fig. 1 gezeigten Ausführungsform handelt es sich um eine Anlage zur Herstellung von Papier aus Altpapier. Dabei sind die in der Fig. 1 gezeigten Stoffauflöser 105, Sortiereinrichtungen 110a, 110b, Entwässerungseinheiten 115a, 115b, Oxidationseinheit bzw. Reduktionseinheit 112, Zentrifugalsortierer 202, Feinsortiervorrichtung 204, Papiermaschinen-Formpartie 206 und Papiermaschinen-Presspartie 208 lediglich schematisch dargestellt und geben die Papierherstellungsanlage nicht im letzten Detail wider. Beispielsweise kann eine der beiden Sortiervorrichtungen 110a, 110b bzw. können beide Sortiervorrichtungen 110a, 110b auch mehrstufig ausgebildet sein und mithin eine Sequenz an Sortiereinrichtungen umfassen.

Genauso gut kann es sich bei der erfindungsgemäßen Anlage um eine Anlage zur Herstellung von Papier aus Frischfasern oder um jede beliebige andere Anlage handeln, in der wenigstens eine Prozesswasseraufbereitungseinheit vorgesehen ist, wobei wenigstens eine der Prozesswasseraufbereitungseinheiten einen mit anaeroben Mikroorganismen versetzten anaeroben Reaktor, eine erste Trennvorrichtung sowie eine zweite Trennvorrichtung aufweist. In dem letztgenannten Fall sind die in der Fig. 1 dargestellten Stoffauflöser 105, Sortiereinrichtungen 110a, 110b, Entwässerungseinheiten 115a, 115b, Oxidationseinheit bzw. Reduktionseinheit 112, Zentrifugalsortierer 202, Feinsortiervorrichtung 204, Papiermaschinen-Formpartie 206 und Papiermaschinen-Presspartie 208 durch entsprechende andere Vorrichtungen bzw. Vorrichtungsteile ersetzt.

In der Fig. 1 umfasst die Anlage eine zweistufige Stoffaufbereitung. Selbstverständlich ist es auch möglich, insbesondere bei der Herstellung von mehrlagigem Papier, zwei oder mehr parallele Stoffaufbereitungen vorzusehen.

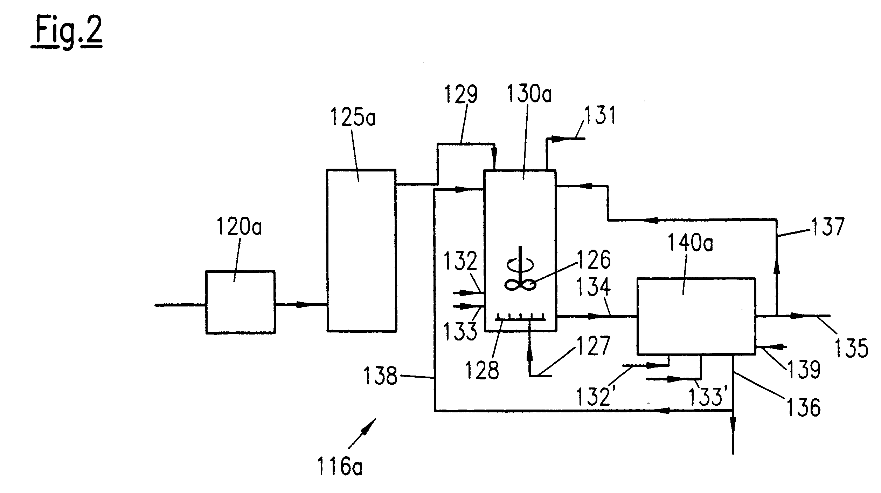

In der Fig. 2 ist die Prozesswasseraufbereitungseinheit 116a der ersten Stufe 101a der Altpapieraufbereitungsvorrichtung 100 der in der Fig. 1 gezeigten Anlage in größerem Detail dargestellt. Dabei ist die erste Trennvorrichtung 130a als Stripbehälter ausgestaltet, welcher einen Propellerrührer 126, einen mit einer Gaszufuhrleitung 127 verbundenen Gasverteiler 128, eine Zufuhrleitung 129 für das aus dem anaeroben Reaktor 125a kommende Prozesswasser in den Stripbehälter, eine Gasabfuhrleitung 131, eine Zufuhrleitung 132 für Fällungsmittel und eine Zufuhrleitung 133 für Flockungshilfsmittel aufweist. Von der ersten Trennvorrichtung 130a führt eine Prozesswasserleitung 134 in die zweite Trennvorrichtung 140a, welche als Druckentspannungsflotationsreaktor ausgestaltet ist. Auch die zweite Trennvorrichtung 140a weist eine Zufuhrleitung 132' für Fällungsmittel und eine Zufuhrleitung 133' für Flockungshilfsmittel auf. Ferner umfasst die zweite Trennvorrichtung 140a eine Zufuhrleitung 139 für Druckluft enthaltendes Wasser. Zudem weist die zweite Trennvorrichtung 140a eine Prozesswasserabfuhrleitung 135 und eine Feststoffabfuhrleitung 136 auf, wobei von der Prozesswasserabfuhrleitung 135 aus eine Teilstromrückfuhrleitung 137 für Prozesswasser in den oberen Bereich der ersten Trennvorrichtung 130a führt und von der Feststoffabfuhrleitung 136 aus eine Teilstromrückfuhrleitung 138 für Feststoff in den oberen Bereich der ersten Trennvorrichtung 130a führt.

Beim Betrieb der Anlage werden aus dem Prozesswasser in der Stoffrückgewinnungseinheit 120a der Prozesswasseraufbereitungseinheit 116a der ersten Stufe 101a der Altpapieraufbereitungsvorrichtung 100 in dem Prozesswasser enthaltene Faserstoffe abgetrennt. Von der Stoffrückgewinnungseinheit 120a gelangt das Prozesswasser in den anaeroben Reaktor 125a, in dem in dem Prozesswasser gelöste oder kolloidal gelöste organische Stoffe durch die Wirkung der anaeroben Mikroorganismen abgebaut werden. Von dem anaeroben Reaktor 125a wird das Prozesswasser dann über die Prozesswasserzufuhrleitung 129 in den oberen Bereich der als Stripbehälter ausgestalteten ersten Trennvorrichtung 130a geführt, in der das Prozesswasser von oben nach unten geführt wird. In den unteren Bereich der ersten Trennvorrichtung 130a wird über eine Gaszufuhrleitung 127 und einen Gasverteiler 128 Luft eingeführt, welche die erste Trennvorrichtung 130a von unten nach oben, also im Gegenstrom zu dem Prozesswasser, durchströmt. Zudem werden der ersten Trennvorrichtung über die Zufuhrleitungen 132, 133 kontinuierlich Fällungsmittel (z.B. Natronlauge) und Flockungshilfsmittel (z.B. Polyacrylamid) zugeführt, wobei das Prozesswasser, das Fällungsmittel, das Flockungshilfsmittel und die Luft in der ersten Trennvorrichtung durch den Propellerrührer 126 miteinander vermischt werden. Durch diese Verfahrensführung wird aus dem Prozesswasser darin enthaltenes Gas ausgetrieben, welches zusammen mit der der ersten Trennvorrichtung 130a durch den Gasverteiler 128 zugeführten Luft über die Gasabfuhrleitung 131 aus der ersten Trennvorrichtung 130a abgezogen wird. Durch das aus dem Prozesswasser ausgetriebene Gas verschiebt sich das Gleichgewicht zwischen Ionen und Feststoff in dem Prozesswasser, wie beispielsweise das Kalk-Kohlensäure-Gleichgewicht, zugunsten der Feststoffe, weswegen in dem Prozesswasser Feststoffe präzipitieren, wobei die Feststoffe aufgrund der Vermischung durch den Propellerrührer 126 homogen in dem Prozesswasser suspendiert verbleiben und sich in der ersten Trennvorrichtung 130a nicht (oben oder unten) absetzen. Die aus der zweiten Trennvorrichtung 140a über die Teilstromrückfuhrleitung 138 zurück geführten Feststoffe agieren dabei in der ersten Trennvorrichtung 130a als Kristallisationskeime, welche die Feststoffpräzipitation in dem Prozesswasser begünstigen. Ferner wird die Feststoffpräzipitation durch die der ersten Trennvorrichtung 130a zugeführten Fällungsmittel und Flockungshilfsmittel weiter begünstigt. Das in der ersten Trennvorrichtung 130a behandelte Prozesswasser wird über die Prozesswasserleitung 134 in die als Druckentspannungsflotationsvorrichtung ausgestaltete zweite Trennvorrichtung 140a geleitet, welcher zudem über die Zufuhrleitungen 132', 133' weiteres Fällungsmittel und Flockungshilfsmittel zugegeben wird. Dabei dienen die der zweiten Trennvorrichtung 140a zugeführten Fällungsmittel und Flockungshilfsmittel zur Unterstützung der Präzipitation der letzten in dem Prozesswasser enthaltenen Ionen als Feststoff, also gewissermaßen zur Feinjustierung der Feststofffällung, wohingegen der überwiegende Teil der Feststoffe bzw. die Grobjustierung der Feststofffällung bereits in der ersten Trennvorrichtung 130a stattgefunden hat. Ferner wird der zweiten Trennvorrichtung 140a über die Zufuhrleitung 139 kontinuierlich Wasser, in dem Luft unter Druck gelöst worden ist, zugeführt, welches in der zweiten Trennvorrichtung 140a entspannt wird. Dadurch perlt die in dem über die Leitung 139 zugeführten Wasser enthaltende Luft aus und perlt in Form von kleinen Luftbläschen von unten nach oben durch das in der zweiten Trennvorrichtung 140a enthaltene Wasser, wobei sich die Bläschen an die in dem Prozesswasser suspendierten Feststoffe anlagern. Aufgrund der verringerten Dichte der so gebildeten Luft-Feststoff-Agglomerate steigen diese in der zweiten Trennvorrichtung 140a bis zu dem Prozesswasserspiegel auf, wo diese abgeschöpft werden und durch die Feststoffabfuhrleitung 136 aus der zweiten Trennvorrichtung 140a abgezogen werden, wohingegen das von den Feststoffen befreite Prozesswasser über die Abfuhrleitung 135 aus der zweiten Trennvorrichtung 140a abgezogen wird. Sowohl ein Teilstrom des aus der zweiten Trennvorrichtung 140a abgezogenen Prozesswassers als auch ein Teilstrom des aus der zweiten Trennvorrichtung 140a abgezogenen Feststoffs werden über die Teilstromrückfuhrleitungen 137, 138 in die erste Trennvorrichtung 130a zurückgeführt.

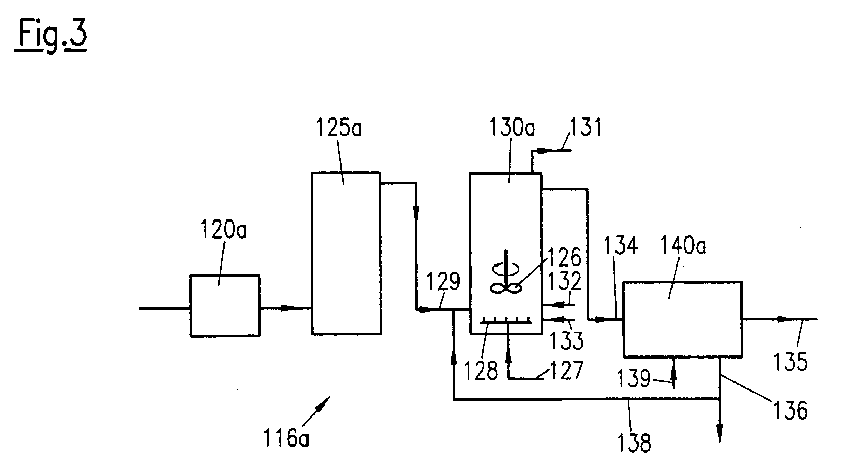

Die in der Fig. 3 dargestellte Prozesswasseraufbereitungseinheit 116a gemäß eines weiteren Ausführungsbeispiels der vorliegenden Erfindung unterscheidet sich von der in der Fig. 2 dargestellten dadurch, dass diese keine Teilstromrückfuhrleitung für Prozesswasser umfasst, sondern nur eine Teilstromrückfuhrleitung 138 für Feststoff, welche in die Prozesswasserzufuhrleitung 129 mündet. Im weiteren Unterschied wird das aus dem anaeroben Reaktor 125a stammende Prozesswasser der ersten Trennvorrichtung 130a in ihrem unteren Bereich zugeführt, also im Gleichstrom mit der über den Gasverteiler 128 zugeführten Luft durch die erste Trennvorrichtung 130a geführt. Ferner weist die zweite Trennvorrichtung 140a der in der Fig. 3 dargestellten Prozesswasseraufbereitungseinheit 116a keine Zufuhrleitungen 132', 133' für Fällungsmittel bzw. Flockungshilfsmittel auf.

### Bezugszeichenliste

- 100: Stoff-/Altpapieraufbereitungsvorrichtung
- 101a: erste Stufe der Stoff-/Altpapieraufbereitungsvorrichtung
- 101b: zweite Stufe der Stoff-/Altpapieraufbereitungsvorrichtung
- 102: Rohstoffeinlass
- 105: Pulper/ Stoffauflöser
- 110a, 110b: Sortiervorrichtung
- 112: Oxidationseinheit/Reduktionseinheit
- 115a, 115b: Entwässerungseinheit
- 116a, 116b: Prozesswasseraufbereitungseinheit der Stoff-/Altpapieraufbereitungsvorrichtung
- 118a, 118b: Rejektbehandlungseinheit
- 120a, 120b: Stoffrückgewinnungseinheit
- 122: Entstoffungseinheit
- 124: Rückführleitung
- 125a, 125b: anaerober Reaktor
- 126: Propellerrührer/ Rühreinrichtung
- 127: Gaszufuhrleitung
- 128: Gasverteiler
- 129: Zufuhrleitung für Prozesswasser
- 130a, 130b: erste Trennvorrichtung
- 131: Gasabfuhrleitung
- 132, 132': Fällungsmittelzufuhrleitung
- 133, 133': Flockungshilfsmittelzufuhrleitung
- 134: Prozesswasserleitung
- 135: Prozesswasserabfuhrleitung
- 136: Feststoffabfuhrleitung
- 137: Teilstromrückfuhrleitung für Prozesswasser
- 138: Teilstromrückfuhrleitung für Feststoff
- 139: Zufuhrleitung für Druckluft enthaltendes Wasser
- 140a, 140b: zweite Trennvorrichtung
- 145a, 145b: Rückführleitung
- 170: Leitung
- 170a: Teilstromleitung
- 200: Papiermaschine
- 202: Zentrifugalsortierer
- 204: Feinsortiervorrichtung
- 206: Papiermaschinen-Formpartie
- 208: Papiermaschinen-Presspartie
- 210: Trockenpartie
- 212: Rejektbehandlungseinheit
- 214: Fasserrückgewinnungseinheit
- 216: Prozesswasseraufbereitungseinheit der Papiermaschine
- 220: Entstoffungseinheit
- 225: anaerober Reaktor
- 230: erste Trennvorrichtung
- 240: zweite Trennvorrichtung
- 270: Rückführleitung
- 270a, 270b: Teilstromleitung
- 280: Frischwasserzufuhrleitung
- 300: Abwasserleitung
- 305: mechanische Entstoffungseinheit
- 310: Kühleinheit
- 315: biologische Abwasserreinigungseinheit
- 400: öffentliches Gewässer

## Patentansprüche

1. Verfahren zur Reinigung von Prozesswasser, insbesondere zur kontinuierlichen Reinigung von Prozesswasser in der Papierindustrie, umfassend wenigstens einen Prozesswasseraufbereitungsschritt, welcher die nachfolgenden Schritte umfasst:
a) einen anaeroben Reinigungsschritt, bei dem zu reinigendes Prozesswasser in einem anaeroben Reaktor (125a, 125b, 225) mit anaeroben Mikroorganismen kontaktiert wird, um in dem Abwasser enthaltene Verunreinigungen abzubauen,
b) einen ersten Trennschritt, bei dem aus dem in dem Schritt a) erhaltenen Prozesswasser selektiv in dem Prozesswasser enthaltene(s) Gas(e) abgetrennt wird/werden, wobei der erste Trennschritt b) in einem Stripbehälter durchgeführt wird, in dem das Prozesswasser im Gleichstrom oder im Gegenstrom mit Luft durch den Stripbehälter geführt wird und in dem das Prozesswasser und die Luft mittels einer Mischeinrichtung (126) miteinander vermischt werden und wobei bei dem ersten Trennschritt wenigstens 80 % des/der in dem Prozesswasser enthaltenen Gase(s) abgetrennt werden, und
c) einen zweiten Trennschritt, bei dem aus dem in dem Schritt b) erhaltenen Prozesswasser in dem Prozesswasser enthaltene Feststoffe mittels Druckentspannungsflotation abgetrennt werden, wobei bei der Druckentspannungsflotation die Druckdifferenz zwischen der Druckbeaufschlagung und der Entspannung auf wenigstens 2 bar eingestellt wird.

2. Verfahren nach Anspruch 1,
**dadurch gekennzeichnet, dass**
bei dem ersten Trennschritt b) wenigstens 90 % und ganz besonders bevorzugt wenigstens 95 % des/der in dem Prozesswasser enthaltenen Gase(s) abgetrennt werden.

3. Verfahren nach Anspruch 1 oder 2,
**dadurch gekennzeichnet, dass**
das Prozesswasser bei dem ersten Trennschritt b) von unten nach oben durch den Stripbehälter geleitet wird, dem Stripbehälter in seinem unteren Bereich Luft derart zugeführt wird, dass die Luft in Form von Luftblasen durch das Prozesswasser durchperlt, und das Prozesswasser und die Luftblasen in dem Stripbehälter mittels einer Mischeinrichtung (126) miteinander vermischt werden.

4. Verfahren nach Anspruch 3,
**dadurch gekennzeichnet, dass**
die Luft dem Stripbehälter derart zugeführt wird, dass die Luftblasen eine durchschnittliche Größe von 150 bis 600 µm aufweisen.

5. Verfahren nach einem der vorhergehenden Ansprüche,
**dadurch gekennzeichnet, dass**
das Prozesswasser während dem ersten Trennschritt b) auf einen pH-Wert zwischen 6,5 und 10, bevorzugt zwischen 6,8 und 9 und besonders bevorzugt zwischen 7,2 und 8,2 eingestellt wird.

6. Verfahren nach einem der vorhergehenden Ansprüche,
**dadurch gekennzeichnet, dass**
dem Prozesswasser nach dem zweiten Trennschritt c) ein Teilstrom entnommen wird, dieser Teilstrom mit dem Prozesswasser nach dem anaeroben Reinigungsschritt a) vermischt wird und die so erhaltene Mischung dem ersten Trennschritt b) unterworfen wird.

7. Verfahren nach einem der vorhergehenden Ansprüche,
**dadurch gekennzeichnet, dass**
ein Teil des bei dem zweiten Trennschritt c) anfallenden Feststoffs entnommen wird, dieser Teil mit dem Prozesswasser nach dem anaeroben Reinigungsschritt a) vermischt wird und die so erhaltene Mischung dem ersten Trennschritt b) unterworfen wird.

8. Verfahren nach einem der vorhergehenden Ansprüche,
**dadurch gekennzeichnet, dass**
das dem Prozesswasseraufbereitungsschritt zugeführte Prozesswasser aus einer Stoffaufbereitungsvorrichtung (100) und/oder aus einer Papiermaschine (200) kommt.

9. Verfahren nach Anspruch 8,
**dadurch gekennzeichnet, dass**
das dem Prozesswasseraufbereitungsschritt kontinuierlich zugeführte Prozesswasser aus wenigstens einer Stufe (101a, 101 b) einer Altpapieraufbereitungsvorrichtung (100) und/oder einer Papiermaschine (200) kommt.

10. Anlage zur Reinigung von Prozesswasser, insbesondere zur kontinuierlichen Reinigung von Prozesswasser in der Papierindustrie, welche wenigstens eine Prozesswasseraufbereitungseinheit (116a, 116b, 226) aufweist, wobei die Prozesswasseraufbereitungseinheit (116a, 116b, 226) umfasst:
i) einen Reaktor (125a, 125b, 225) zur anaeroben Reinigung von Prozesswasser mit wenigstens einer Zufuhrleitung zur Zuführung von zu reinigendem Prozesswasser in den Reaktor (125a, 125b, 225) sowie wenigstens einer Abfuhrleitung zur Abführung von gereinigtem Prozesswasser aus dem Reaktor,
ii) eine stromabwärts des anaeroben Reaktors (125a, 125b, 225) angeordnete erste Trennvorrichtung (130a, 130b, 230) zur selektiven Abtrennung von Gasen aus dem Prozesswasser, wobei die erste Trennvorrichtung (130a, 130b, 230) eine mit der Abfuhrleitung des anaeroben Reaktors (125a, 125b, 225) verbundene Zufuhrleitung (129) für Prozesswasser, eine Gaszufuhrleitung (127), eine Gasabfuhrleitung (131) und eine Mischeinrichtung (126) aufweist, und wobei die erste Trennvorrichturig (130a, 130b, 230) einen Stripbehälter umfasst, und
iii) eine stromabwärts der ersten Trennvorrichtung (130a, 130b, 230) angeordnete, mit der ersten Trennvorrichtung (130a, 130b, 230) über eine Leitung (134) verbundene zweite Trennvorrichtung (140a, 140b, 240) zur Abtrennung von Feststoffen aus dem Prozesswasser, wobei die zweite Trennvorrichtung (140a, 140b, 240) eine Druckentspannungsflotationsvorrichtung umfasst, welche so ausgelegt ist, dass die Druckdifferenz zwischen der Druckbeaufschlagung und der Entspannung wenigstens 2 bar beträgt.

11. Anlage nach Anspruch 10,
**dadurch gekennzeichnet, dass**
die erste Trennvorrichtung (130a, 130b, 230) einen Stripbehälter umfasst, in dessen unteren Bereich die Zufuhrleitung (129) für Prozesswasser und die Gaszufuhrleitung (127) münden und in dessen oberen Bereich die Gasabfuhrleitung (131) angeordnet ist.

12. Anlage nach einem der Ansprüche 10 oder 11,
**dadurch gekennzeichnet, dass**
an der zweiten Trennvorrichtung (140a, 140b, 240) eine Teilstromrückführleitung (137) für Prozesswasser vorgesehen ist, welche in die zu der ersten Trennvorrichtung (130a, 130b, 230) führende Zufuhrleitung (129) für Prozesswasser mündet.

13. Anlage nach einem der Ansprüche 10 bis 11,
**dadurch gekennzeichnet, dass**
an der zweiten Trennvorrichtung (140a, 140b, 240) eine Teilstromrückführleitung (138) für Feststoff vorgesehen ist, welche in die zu der ersten Trennvorrichtung (130a, 130b, 230) führende Zufuhrleitung (129) für Prozesswasser mündet.

14. Anlage nach einem der Ansprüche 10 bis 13,
**dadurch gekennzeichnet, dass**
die Anlage wenigstens eine Stoffaufbereitungsvorrichtung (100) und/oder wenigstens eine Papiermaschine (200) umfasst, wobei der wenigstens einen Stoffaufbereitungsvorrichtung (100) und/oder der wenigstens einen Papiermaschine (200) wenigstens eine der Prozesswasseraufbereitungseinheiten (116a, 116b, 216) zugeordnet ist.

15. Anlage nach Anspruch 14 zur Herstellung von Papier aus Altpapier,
**dadurch gekennzeichnet, dass**
die Anlage eine Altpapieraufbereitungsvorrichtung (100) als Stoffaufbereitungsvorrichtung (100) zur Herstellung von Faserstoff aus dem Altpapier und/oder eine Papiermaschine (200) zur Herstellung von Papier aus dem Faserstoff umfasst, wobei die Altpapieraufbereitungsvorrichtung (100) eine oder mehrere Stufen aufweist (101a, 101b) und wenigstens eine dieser Stufen (101a, 101b) und/oder die Papiermaschine (200) eine eigene Prozesswasseraufbereitungseinheit (116a, 116b, 216) umfassen.

## Claims

1. A method for purifying process water, in particular for continuously purifying process water in the paper-making industry, comprising at least one process water treatment step which comprises the following steps:
a) an anaerobic purification step in which process water to be purified is brought into contact with anaerobic microorganisms in an anaerobic reactor (125a, 125b, 225) to degrade impurities contained in the waste water;
b) a first separation step in which gas(es) contained in the process water is/are selectively separated from the process water obtained in step a), wherein the first separation step b) is carried out in a strip tank in which the process water is conducted with air in co-flow or in counter flow through the strip tank and in which the process water and the air are mixed with one another by means of a mixing device (126), and wherein at least 80% of the gas(es) contained in the process water is separated in the first separation step; and
c) a second separation step in which solids contained in the process water are separated from the process water obtained in step b) by means of dissolved air flotation, wherein the pressure difference between the pressure applied and the expansion is set to at least 2 bar in the dissolved air flotation.

2. A method in accordance with claim 1,
**characterized in that**
at least 90%, and very particularly preferably at least 95%, of the gas(es) contained in the process water is separated in the first separation step b).

3. A method in accordance with claim 1 or claim 2,
**characterized in that**
the process water is led from bottom to top through the strip tank in the first separation step b), air is supplied to the strip tank in its lower region such that the air bubbles through the process water in the form of air bubbles and the process water and the air bubbles are mixed with one another by means of a mixing device (126) in the strip tank.

4. A method in accordance with claim 3,
**characterized in that**
the air is supplied to the strip tank such that the air bubbles have an average size from 150 to 600 µm.

5. A method in accordance with any one of the preceding claims,
**characterized in that**
the process water is set during the first separation step b) to a pH between 6.5 and 10, preferably between 6.8 and 9, and particularly preferably between 7.2 and 8.2.

6. A method in accordance with any one of the preceding claims,
**characterized in that**
a part flow is removed from the process water after the second separation step c), this part flow is mixed with the process water after the anaerobic cleaning step a) and the mixture thus obtained is subjected to the first separation step b).

7. A method in accordance with any one of the preceding claims,
**characterized in that**
a portion of the solids arising in the second separation step c) is removed, this portion is mixed with the process water after the anaerobic purification step a) and the mixture thus obtained is subjected to the first separation step b).

8. A method in accordance with any one of the preceding claims,
**characterized in that**
the process water supplied to the process water treatment step comes from a stock preparation apparatus (100) and/or from a paper-making machine (200).

9. A method in accordance with claim 8,
**characterized in that**
the process water continuously supplied to the process water treatment step comes from at least one stage (101a, 101b) of a recovered paper treatment apparatus (100) and/or from a paper-making machine (200).

10. A plant for purifying process water, in particular for continuously purifying process water in the paper-making industry, which has at least one process water treatment unit (116a, 116b, 226), wherein the process water treatment unit (116a, 116b, 226) comprises:
i) a reactor (125a, 125b, 225) for the anaerobic purification of process water with at least one feed line for supplying process water to be purified into the reactor (125a, 125b, 225) as well as at least one outflow line for draining purified process water from the reactor;
ii) a first separation apparatus (130a, 130b, 230) arranged downstream of the anaerobic reactor (125a, 125b, 225) for selectively separating gases from the process water, wherein the first separation apparatus (130a, 130b, 230) has a feed line (129) for process water connected to the outflow line of the anaerobic reactor (125a, 125b, 225), a gas feed line (127), a gas outflow line (131) and a mixing device (126) and wherein the first separation apparatus (130a, 130b, 230) comprises a strip tank; and
iii) a second separation apparatus (140a, 140b, 240) for separating solids from the process water arranged downstream of the first separation apparatus (130a, 130b, 230) and connected to the first separation apparatus (130a, 130b, 230) via a line (134), wherein the second separation apparatus (140a, 140b, 240) comprises a dissolved air flotation apparatus which is designed so that the pressure difference between the pressure application and the expansion amounts to 2 bar.

11. A plant in accordance with claim 10,
**characterized in that**
the first separation apparatus (130a, 130b, 230) comprises a strip tank in whose lower region the feed line (129) for process water and the gas feed line (127) open and in whose upper region the gas outflow line (131) is arranged.

12. A plant in accordance with one of the claims 10 or 11,
**characterized in that**
a part flow return line (137) for process water is provided at the second separation apparatus (140a, 140b, 240) and opens into the fed line (129) for process water leading to the first separation apparatus (130a, 130b, 230).

13. A plant in accordance with one of the claims 10 to 11,
**characterized in that**
a part flow return line (138) for solids is provided at the second separation apparatus (140a, 140b, 240) and opens into the feed line (129) for process water leading into the first separation apparatus (130a, 130b, 230).

14. A plant in accordance with any one of the claims 10 to 13,
**characterized in that**
the plant comprises at least one stock preparation apparatus (100) and/or at least one paper-making machine (200), with at least one of the process water treatment units (116a, 116b, 216) being associated with the at least one stock preparation apparatus (100) and/or with the at least one paper-making machine (200).

15. A plant in accordance with claim 14 for the manufacture of paper from recovered paper,
**characterized in that**
the plant comprises a recovered paper treatment apparatus (100) as a stock preparation apparatus (100) for manufacturing fibrous material from the recovered paper and/or a paper-making machine (200) for manufacturing paper from the fibrous material, with the recovered paper treatment apparatus (100) having one or more stages (101a, 101b) and at least one of these stages (101a, 101b) and/or the paper-making machine (200) comprising their own process water treatment unit (116a, 116b, 216).

## Revendications

1. Procédé d'épuration d'eaux industrielles, en particulier pour l'épuration continue d'eaux industrielles dans l'industrie du papier, comprenant au moins une phase de traitement des eaux industrielles, laquelle comprend les étapes suivantes :
a) une étape d'épuration anaérobie, où les eaux industrielles à épurer sont mises en contact avec des micro-organismes anaérobies dans un réacteur anaérobie (125a, 125b, 225) pour dégrader les impuretés contenues dans les eaux résiduaires,
b) une première étape de séparation, où le ou les gaz contenus dans les eaux industrielles sont sélectivement séparés des eaux industrielles obtenues lors de l'étape a), la première étape de séparation b) étant exécutée dans un récipient de strippage où les eaux industrielles traversent le récipient de strippage dans le même sens que l'air ou à contre-courant de celui-ci et où les eaux industrielles et l'air sont mélangés au moyen d'un dispositif mélangeur (126), et au moins 80 % du ou des gaz contenus dans les eaux industrielles étant séparés lors de la première étape de séparation, et
c) une deuxième étape de séparation, où les matières solides contenus dans les eaux industrielles sont séparées par flottation pression-détente des eaux industrielles obtenues lors de l'étape b), le différentiel de pression entre l'application de pression et la détente étant réglé à au moins 2 bar lors de la flottation pression-détente.

2. Procédé selon la revendication 1, **caractérisé en ce que** :
au moins 90 %, et préférentiellement au moins 95 % du ou des gaz contenus dans les eaux industrielles sont séparés lors de la première étape de séparation.

3. Procédé selon la revendication 1 ou 2, **caractérisé en ce que** :
les eaux industrielles traversent le récipient de strippage du bas vers le haut lors de la première étape de séparation b), **en ce que** de l'air est amené dans la partie inférieure du récipient de strippage de manière à faire perler l'air sous la forme de bulles d'air dans les eaux industrielles, et **en ce que** les eaux industrielles et les bulles d'air sont mélangées par un dispositif mélangeur (126) dans le récipient de strippage.

4. Procédé selon la revendication 3, **caractérisé en ce que** :
l'air est amené au récipient de strippage de telle manière que les bulles d'air présentent une grandeur moyenne comprise entre 150 et 600 µm.

5. Procédé selon l'une des revendications précédentes, **caractérisé en ce que** :
la valeur pH des eaux industrielles est réglée entre 6,5 et 10, avantageusement entre 6,8 et 9 et préférentiellement entre 7,2 et 8,2 lors de la première étape de séparation b).

6. Procédé selon l'une des revendications précédentes, **caractérisé en ce que** :
un flux partiel est prélevé des eaux industrielles après la deuxième étape de séparation c), ledit flux partiel est mélangé avec les eaux industrielles après l'étape d'épuration anaérobie a) et le mélange ainsi obtenu est soumis à la première étape de séparation b).

7. Procédé selon l'une des revendications précédentes, **caractérisé en ce que** :
une partie de la matière solide précipitée lors de la deuxième étape de séparation c) est prélevée, ladite partie est mélangée avec les eaux industrielles après l'étape d'épuration anaérobie a) et le mélange ainsi obtenu est soumis à la première étape de séparation b).

8. Procédé selon l'une des revendications précédentes, **caractérisé en ce que** :
les eaux industrielles soumises à la phase de traitement des eaux industrielles proviennent d'un dispositif de traitement de matière (100) et/ou d'une machine à papier (200).

9. Procédé selon la revendication 8, **caractérisé en ce que** :
les eaux industrielles soumises de manière continue à la phase de traitement des eaux industrielles proviennent d'au moins un étage (101a, 101b) d'un dispositif de traitement des vieux papiers (100) et/ou d'une machine à papier (200).

10. Installation pour l'épuration d'eaux industrielles, en particulier pour l'épuration continue d'eaux industrielles dans l'industrie du papier, comportant au moins une unité de traitement des eaux industrielles (116a, 116b, 226), ladite unité de traitement des eaux industrielles (116a, 116b, 226) comprenant :
i) un réacteur (125a, 125b, 225) pour l'épuration anaérobie d'eaux industrielles avec au moins une conduite d'amenée pour l'amenée des eaux industrielles à épurer vers le réacteur (125a, 125b, 225), ainsi qu'au moins une conduite d'évacuation pour l'évacuation des eaux industrielles épurées hors du réacteur,
ii) un premier dispositif de séparation (130a, 130b, 230) disposé en aval du réacteur anaérobie (125a, 125b, 225) pour la séparation sélective de gaz des eaux industrielles, ledit premier dispositif de séparation (130a, 130b, 230) comportant une conduite d'amenée (129) pour eaux industrielles raccordée à la conduite d'évacuation du réacteur anaérobie (125a, 125b, 225), une conduite d'amenée de gaz (127), une conduite d'évacuation de gaz (131) et un dispositif mélangeur (126), ledit premier dispositif de séparation (130a, 130b, 230) comprenant un récipient de strippage, et
iii) un deuxième dispositif de séparation (140a, 140b, 240) disposé en aval du premier dispositif de séparation (130a, 130b, 230), raccordé par une conduite (134) au premier dispositif de séparation (130a, 130b, 230), pour la séparation de matières solides des eaux industrielles, ledit deuxième dispositif de séparation (140a, 140b, 240) comprenant un dispositif de flottation pression-détente prévu pour que le différentiel de pression entre l'application de pression et la détente soit supérieur ou égal à 2 bar.

11. Installation selon la revendication 10, **caractérisée en ce que** :
le premier dispositif de séparation (130a, 130b, 230) comprend un récipient de strippage, dans la partie inférieure duquel débouchent la conduite d'amenée (129) pour les eaux industrielles et la conduite d'amenée de gaz (127), et dans la partie supérieure duquel est disposée la conduite d'évacuation de gaz (131).

12. Installation selon la revendication 10 ou 11, **caractérisée en ce que** :
une conduite de retour de flux partiel (137) pour eaux industrielles est prévue sur le deuxième dispositif de séparation (140a, 140b, 240), laquelle débouche dans la conduite d'amenée (129) pour eaux industrielles menant au premier dispositif de séparation (130a, 130b, 230).

13. Installation selon l'une des revendications 10 et 11, **caractérisée en ce que** :
une conduite de retour de flux partiel (138) pour matière solide est prévue sur le deuxième dispositif de séparation (140a, 140b, 240), laquelle débouche dans la conduite d'amenée (129) pour eaux industrielles menant au premier dispositif de séparation (130a, 130b, 230).

14. Installation selon l'une des revendications 10 à 13, ladite installation étant caractérisée en qu'elle comprend au moins un dispositif de traitement de matière (100) et/ou au moins une machine à papier (200), au moins une des unités de traitement des eaux industrielles (116a, 116b, 216) étant associée à l'au moins un dispositif de traitement de matière (100) et/ou à l'au moins une machine à papier (200).

15. Installation selon la revendication 14 pour la fabrication de papier à partir de vieux papiers, ladite installation étant **caractérisée en ce qu'**elle comprend un dispositif de traitement de vieux papiers (100) en tant que dispositif de traitement de matière (100) pour la fabrication de fibres à partir des vieux papiers, et/ou une machine à papier (200) pour la fabrication de papier à partir des fibres, le dispositif de traitement de vieux papiers (100) comportant un ou plusieurs étages (101a, 101b), et au moins un desdits étages (101a, 101b) et/ou la machine à papier (200) comprenant une unité de traitement des eaux industrielles (116a, 116b, 216) propre.
